# EUROPEAN PATENT APPLICATION

(11) **EP 3 306 107 A1**
(43) Date of publication of application: **11.04.2018**
(21) Application number: 15894288.8
(22) Date of filing: 30.10.2015
(51) Int. Cl.: F04D 29/58

(54) **BLOWER DEVICE AND CLEANER**

(30) Priority: 29.05.2015 US 201562168165 P; 29.06.2015 US 201562185854 P; 10.09.2015 JP 2015178635
(71) Applicant: Nidec Corporation, Kyoto-shi, Kyoto 601-8205 (JP)
(72) Inventor: HAYAMITSU, Ryosuke, Kyoto-shi Kyoto 601-8205 (JP)
(74) Representative: Stöckeler, Ferdinand
(86) International application number: PCT/JP2015/080701
(87) International publication number: WO 2016/194256

(57) **Abstract**

A blower according to an exemplary embodiment of the present invention includes a rotor that has a shaft, a stator, a housing, an impeller attached to the shaft, at an upper side from the stator, and an exhaust air guide portion attached at the upper side of the housing. The housing has a plurality of through holes passing through the housing in the radial direction. The plurality of through holes are disposed following a circumferential direction. The exhaust air guide portion includes an outer periphery cylindrical portion positioned at the outer side of the impeller in the radial direction, and an inner guide portion extending toward the lower side from the outer periphery cylindrical portion. A plurality of the inner guide portion are provided following the circumferential direction, and cover the outer side of the through holes in the radial direction. A guide portion vent that opens to the outer side of the exhaust air guide portion is disposed between inner guide portions that are adjacent in the circumferential direction.

## Description

### Technical Field

The present invention relates to a blower and a vacuum cleaner.

### Background Art

There conventionally has been proposed an electric blower that has a structure where suctioned air passes through the interior of a bracket that supports a stator (e.g., see PTL 1).

### Citation List

### Patent Literature

PTL 1: Japanese Unexamined Patent Application Publication No. 2015-59507

### Summary of Invention

### Technical Problem

In the electric blower in PTL 1, air passes through the interior of a bracket via a hole that passes through the bracket in the axial direction. However, in this case, air that has been discharged toward the outer side in the radial direction from an impeller needs to be guided to the upper side of the bracket. Accordingly, the curvature of an air guiding path tends to be great, and there has been a problem that air loss is great. Also, just passing air through the interior of the bracket can only cool part of the electric motor, so there have been cases where cooling of the electric motor is insufficient.

In light of the above problem, it is an object of an exemplary embodiment of the present invention to provide a blower having a structure that can improve cooling efficiency of the entire motor, while reducing air loss. Also, another object is to provide a vacuum cleaner having such a blower.

### Solution to Problem

A blower according to an exemplary embodiment of the present invention includes a rotor that has a shaft disposed following a center axis extending vertically, a stator positioned at an outer side of the rotor in a radial direction, a cylindrical housing extending in the axial direction, that accommodates the rotor and the stator, an impeller attached to the shaft, at an upper side from the stator, and an exhaust air guide portion attached at the upper side of the housing. The stator includes a ring-shaped core back portion, a plurality of teeth portions extending from the core back portion toward an inner side in the radial direction, and a plurality of coils wound on the teeth portions. The housing has a plurality of through holes passing through the housing in the radial direction. The plurality of through holes are disposed following a circumferential direction. The exhaust air guide portion includes an outer periphery cylindrical portion positioned at the outer side of the impeller in the radial direction, and an inner guide portion extending toward the lower side from the outer periphery cylindrical portion. A plurality of the inner guide portion are provided following the circumferential direction, and cover the outer side of the through holes in the radial direction. A guide portion vent that opens to the outer side of the exhaust air guide portion is disposed between inner guide portions that are adjacent in the circumferential direction.

A vacuum cleaner according to an exemplary embodiment of the present invention includes the above described blower. Advantageous Effects of Invention

According to an exemplary embodiment of the present invention, a blower having a structure that can improve cooling efficiency of the entire motor, while reducing air loss, can be provided. Also, a vacuum cleaner having such a blower can be provided.

### Brief Description of Drawings

[Fig. 1] Fig. 1 is a perspective view illustrating a blower according to the present embodiment.
[Fig. 2] Fig. 2 is a cross-sectional diagram illustrating a blower according to a first embodiment.
[Fig. 3] Fig. 3 is a disassembled perspective view of the blower according to the first embodiment.
[Fig. 4] Fig. 4 is a perspective view, viewing a motor according to the first embodiment from the lower side.
[Fig. 5] Fig. 5 is a perspective view of a stator according to the first embodiment.
[Fig. 6] Fig. 6 is a disassembled perspective view illustrating the stator, a sensor board, and a lower lid, according to the first embodiment.
[Fig. 7] Fig. 7 is a plane cross-sectional view of the motor according to the first embodiment, taken along VII-VII in Fig. 2.
[Fig. 8] Fig. 8 is an explanatory diagram illustrating a mounted state of a rotary sensor according to the first embodiment.
[Fig. 9] Fig. 9 is a partial cutaway perspective view of an exhaust air guide portion according to the first embodiment.
[Fig. 10] Fig. 10 is a partial enlarged cross-sectional view illustrating a first guide path of the blower according to the first embodiment.
[Fig. 11] Fig. 11 is a partial enlarged cross-sectional view illustrating a second guide path of the blower according to the first embodiment.
[Fig. 12] Fig. 12 is a plan view of moving blades of the impeller according to the first embodiment.
[Fig. 13] Fig. 13 is a side view illustrating the blower according to the first embodiment.
[Fig. 14] Fig. 14 is a partial enlarged cross-sectional view illustrating a blower that is another example of the first embodiment.
[Fig. 15] Fig. 15 is a cross-sectional view illustrating a blower that is another example of the first embodiment.
[Fig. 16] Fig. 16 is a cross-sectional view illustrating a blower according to a second embodiment.
[Fig. 17] Fig. 17 is a perspective view illustrating a vacuum cleaner according to an embodiment.

### Description of Embodiments

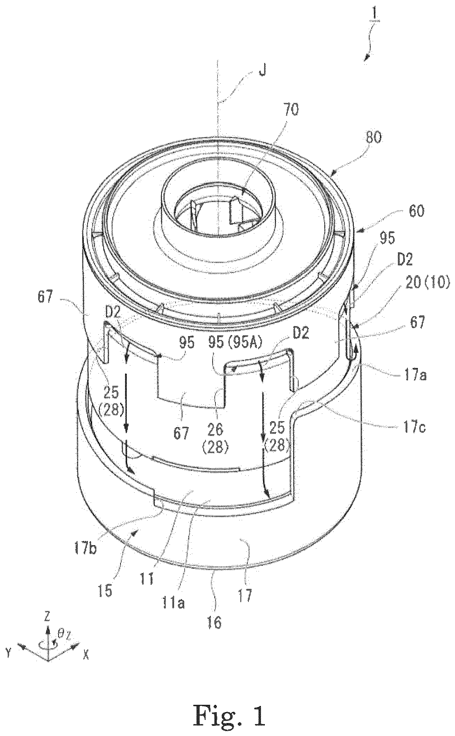

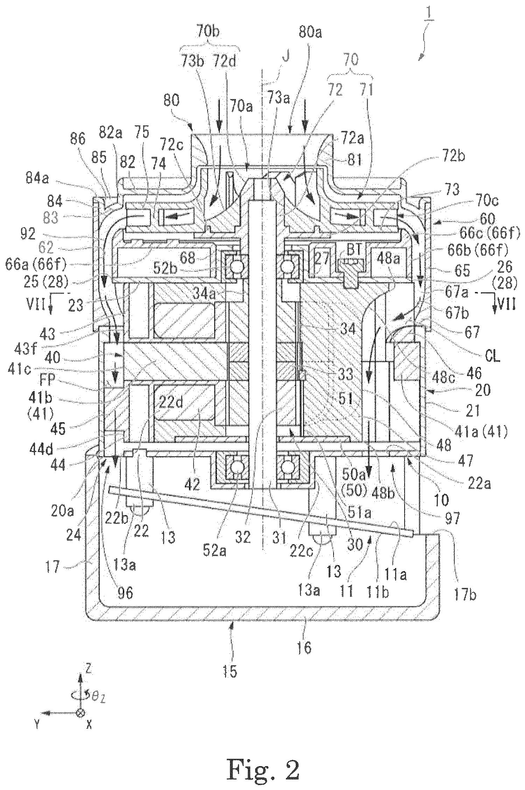

A blower according to embodiments of the present invention will be described below with reference to the drawings. In the drawings, an XYZ coordinate system will be illustrated as a three-dimensional orthogonal coordinate system as appropriate. In the XYZ coordinate system, a Z-axis direction is a direction parallel to an axial direction along a central axis J illustrated in Fig. 1. A Y-axis direction is a direction orthogonal to the Z-axis direction and is a right-left direction in Fig. 2. An X-axis direction is a direction that is orthogonal to both of the Y-axis direction and the Z-axis direction.

Also, in the following description, a direction (the Z-axis direction) in which the central axis J extends will be referred to as a vertical direction. The positive side in the Z-axis direction (+Z side) will be referred to as the "upper side (upper side in the axial direction)" and the negative side in the Z-axis direction (-Z side) will be referred to as the "lower side (lower side in the axial direction)". Note that the vertical direction, the upper side, and the lower side are terms that are used simply for the purpose of description and do not limit the actual positional relationship or direction. In addition, unless otherwise specifically noted, a direction (the Z-axis direction) parallel to the central axis J will be simply referred to as an "axial direction", a radial direction of which the central axis J is the center will be simply referred to as a "radial direction", and a circumferential direction around the central axis J will be simply referred to as a "circumferential direction".

### <First Embodiment>

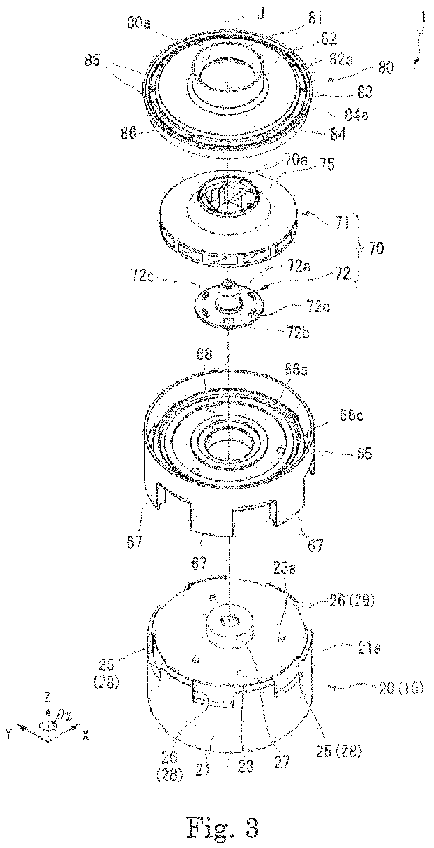

A blower 1 includes a motor 10, an impeller 70, an exhaust air guide portion 60, an impeller housing 80, a control board 11, and a board case 15, as illustrated in Fig. 1 through Fig. 3. The exhaust air guide portion 60 is attached to the upper side (+Z side) of the motor 10. The impeller housing 80 is attached to the upper side of the exhaust air guide portion 60. The impeller 70 is accommodated between the exhaust air guide portion 60 and impeller housing 80. The impeller 70 is attached to the motor 10 rotatably on the central axis J. The control board 11, and the board case 15 that covers the control board 11, are attached on the lower side (-Z side) of the motor 10. Note that the control board 11 and board case 15 are omitted from illustration in Fig. 3.

Of the circumferential directions, the impeller 70 rotates in a counterclockwise direction (+θz direction) as viewed from the upper side in the present embodiment. In the following description, a side of advancing in the counterclockwise direction (+θz side) as viewed from the upper side will be referred to as forward side in rotational direction, and a side of advancing in the clockwise direction (-θz side) as viewed from the upper side will be referred to as rearward side in rotational direction.

In the present embodiment, air is drawn down into the impeller 70 by the impeller 70 being rotated by the motor 10. Air drawn into the impeller 70 is discharged to the outer side in the radial direction of the impeller 70. The outer side in the radial direction of the impeller 70 is covered by the exhaust air guide portion 60, which is cylindrical, for example. Air discharged from the impeller 70 flows downward following the inner side in the radial direction of the exhaust air guide portion 60.

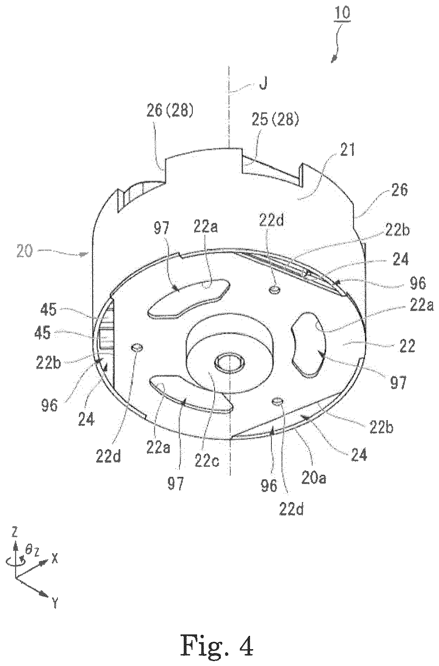

The motor 10 includes a housing 20, a lower lid 22, a rotor 30 that has a shaft 31, a stator 40, a sensor board 50, a lower-side bearing 52a, and an upper-side bearing 52b, as illustrated in Fig. 2 and Fig. 4. Accordingly, the blower 1 is provided with the rotor 30 having the shaft 31, the stator 40, the housing 20, the impeller 70, and the exhaust air guide portion 60.

The housing 20 is a cylindrical form extending in the axial direction, and accommodates the rotor 30 and stator 40, as illustrated in Fig. 2. The housing 20 is a covered cylindrical container. The housing 20 has a peripheral wall 21 that is cylindrical in shape, an upper lid portion 23 positioned at the upper end of the peripheral wall 21, and an upper-side bearing holding portion 27 positioned at the middle portion of the upper lid portion 23. The stator 40 is fixed on the inner side face of the housing 20. The upper-side bearing holding portion 27 is a cylinder protruding toward the upper side from the middle portion of the upper lid portion 23. The upper-side bearing holding portion 27 holds the upper-side bearing 52b within.

The housing 20 has multiple through holes 28 passing through the housing 20 in the radial direction, as illustrated in Fig. 3. Accordingly, part of the air discharged from the impeller 70 to the outer side in the radial direction can flow into the housing 20 (into the motor 10) and cool the stator 40.

Now, in a case where the upper lid portion of the housing has through holes passing through in the axial direction, and air discharged from the impeller is to flow into the motor through these holes, there is a need to guide the air discharged from the impeller to the outer side in the radial direction to the upper side of the upper lid portion, i.e., to the lower side of the impeller. The distance between the impeller and upper lid portion in the axial direction is relatively small, so the curvature of the guidance path for guiding the air discharged from the impeller into the motor tends to be tight. Accordingly, there has been a problem that the loss of air increases from being discharged from the impeller until flowing into the motor.

As opposed to this, the through holes 28 pass through the housing 20 in the radial direction, so the air discharged from the impeller 70 to the outer side in the radial direction can be made to flow into the motor 10 from the peripheral face of the housing 20 (peripheral wall 21), as illustrated in Fig. 2. Thus, the air discharged from the impeller 70 can be made to flow into the motor 10 by being made to flow downwards. Accordingly, the curvature of the guide path for guiding the air discharged from the impeller 70 to within the motor 10 can be suppressed from being tight. As a result, loss of air between being discharged from the impeller 70 until flowing into the motor 10 can be reduced.

The through holes 28 are provided at an edge portion 21a of the peripheral wall 21 and upper lid portion 23, as illustrated in Fig. 3. Multiple through holes 28 are provided along the circumferential direction. The through holes 28 include a first through hole 26 communicating with air further inward in the radial direction than a core back portion 41a, as illustrated in Fig. 2. Accordingly, air can be sent toward a later-described coil 42 by the air that has flow into the housing 20 from the first through hole 26, and thereby cool the coil 42. Accordingly, the cooling efficiency of the coil 42, which generates the most heat at the stator 40, can be improved, and the cooling efficiency of the stator 40 can be improved.

The through holes 28 include multiple first through holes 26. The number of first through holes 26 is three in Fig. 3. The first through holes 26 are disposed equidistantly following the circumferential direction. Accordingly, the first through holes 26 can be disposed for each of later-described multiple coils 42, and thereby cool the coils 42 by air flowing into the housing 20. Thus, the cooling efficiency of the coils 42 can be further improved, and the cooling efficiency of the stator 40 can be further improved.

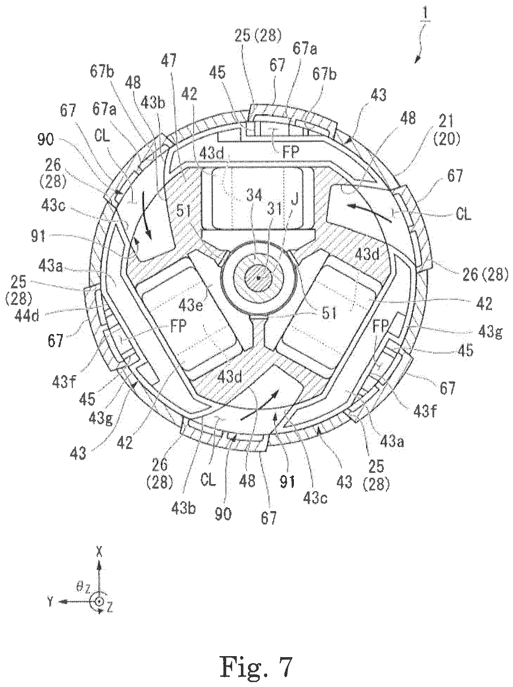

The through holes 28 include multiple through holes 25. That is to say, the through holes 28 include multiple first through holes 26 and multiple second through holes 25. The number of second through holes 25 is three in Fig. 3. The first through holes 26 and second through holes 25 are provided alternating in the circumferential direction (see Fig. 7). The second through holes 25 are disposed equidistantly in the circumferential direction. Accordingly, both the coils 42 and the core back portion 41a can be cooled.

The first through holes 26 and second through holes 25 reach from the upper portion side of the peripheral wall 21 to the outer edge portion of the upper lid portion 23, as illustrated in Fig. 3. The first through holes 26 and second through holes 25 pass through the peripheral wall 21 in the radial direction. Further, the first through holes 26 and second through holes 25 pass through the upper lid portion 23 in the axial direction, near the outer edge portion of the upper lid portion 23 in the radial direction.

The lower lid 22 is attached to an opening end 20a at the lower side (-Z side) of the housing 20. A cylindrical lower-side bearing holding portion 22c that protrudes downwards from the lower face of the lower lid 22 is provided at the middle portion of the lower lid 22. The lower-side bearing holding portion 22c holds the lower-side bearing 52a.

Lower lid through holes 22a that pass through the lower lid 22 in the axial direction are provided at three positions on the lower lid 22 around the axis, as illustrated in Fig. 4. The lower lid through holes 22a are arc-shaped, having a width in the radial direction. At least a part of the lower lid through holes 22a is positioned further on the outer side in the radial direction than the outer peripheral edge of a later-described main unit portion 50a of the sensor board 50, as illustrated in Fig. 2.

Notched portions 22b where the peripheral portion of the lower lid 22 has been linearly notched are provided at three positions on the peripheral edge of the lower lid 22, as illustrated in Fig. 4. Gaps between the opening end 20a at the lower side of the housing 20 and the notched portions 22b are lower-side openings 24 of the motor 10.

The rotor 30 has the shaft 31, as illustrated in Fig. 2. The shaft 31 is disposed following the central axis J that extends vertically. The rotor 30 further has a rotor magnet 33, a lower-side magnet fixing member 32, and an upper-side magnet fixing member 34. The rotor magnet 33 has a cylindrical shape, and encompasses the shaft 31 around the axis (θz direction) at the outer side in the radial direction.

The rotor magnet 33 is fixed to the shaft 31. The lower-side magnet fixing member 32 and upper-side magnet fixing member 34 are cylindrical shapes, having an outer diameter equivalent to that of the rotor magnet 33. The lower-side magnet fixing member 32 and upper-side magnet fixing member 34 are attached to the shaft 31, sandwiching the rotor magnet 33 from both sides in the axial direction. The upper-side magnet fixing member 34 has a small radius portion 34a at the upper side portion in the central axis direction, which is smaller than the lower side (rotor magnet 33 side).

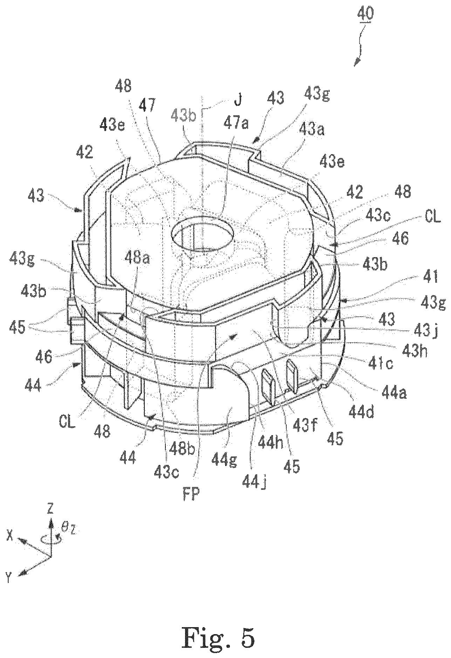

The shaft 31 is rotatably supported around the axis (θz direction) by the lower-side bearing 52a and upper-side bearing 52b. The impeller 70 is attached to the end of the shaft 31 at the upper side (+Z side). The impeller 70 is attached to the shaft 31 further upward than the stator 40. The impeller 70 integrally rotates with the shaft 31 on the axis, as illustrated in Fig. 5.

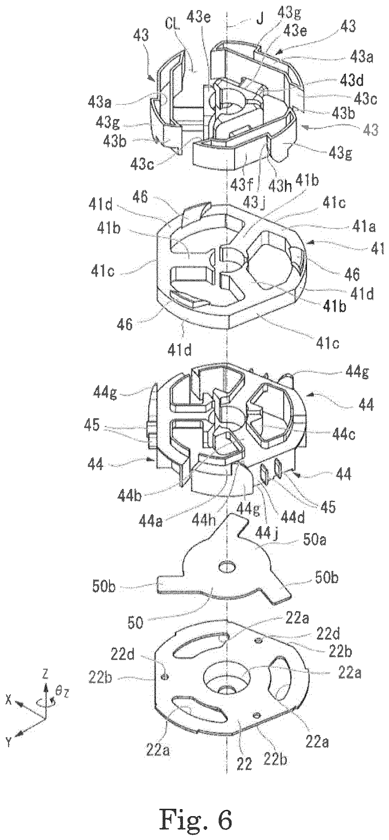

The stator 40 is positioned on the outer side from the rotor 30 in the radial direction. The stator 40 encompasses the rotor 30 around the axis (θz direction). The stator 40 has a stator core 41, inclined members 46, multiple (three) upper-side insulators 43, multiple (three) lower-side insulators 44, and multiple coils 42, as illustrated in Fig. 5 and Fig. 6. The stator 40 also has a molded portion 47 that holds the coils 42 within, as illustrated in Fig. 5.

The stator core 41 includes the core back portion 41a and multiple (three) teeth portions 41b, as illustrated in Fig. 6. Accordingly, the stator 40 has the core back portion 41a, the multiple teeth portions 41b, and the multiple coils 42. The core back portion 41a is ring-shaped. More specifically, the core back portion 41a is ring-shaped around the central axis J. The core back portion 41a has a configuration where linear portions 41c at three positions around the axis, and three arc portions 41d, are alternatingly positioned.

The core back portion 41a is positioned at the middle of the stator 40 in the axial direction, as illustrated in Fig. 2. The through holes 28 are positioned on to upper side from the core back portion 41a. Accordingly, air flowing into the housing 20 can be caused to flow from the upper side of the stator 40 to the lower side, and the stator 40 is readily cooled.

The multiple teeth portions 41b extend inward in the radial direction from the core back portion 41a. More specifically, the teeth portions 41b each extend inward in the radial direction from the inner peripheral faces of the linear portions 41c. The teeth portions 41b are disposed equidistantly following the circumferential direction. The multiple coils 42 are wound on the teeth portions 41b, as illustrated in Fig. 2.

Note that in the present specification, the expression that a certain member is ring-shaped includes, in addition to cases of being continuous for a full circle, cases where part of the circle is not continuous as well. Also, the expression that a certain member is ring-shaped also includes cases where the certain member is made up of multiple members, and the multiple members are arrayed in a ring shape. For example, the core back portion 41a may be made up of multiple core pieces, with the multiple core prices being disposed following the circumferential direction.

As illustrated in Fig. 6, the inclined members 46 that guide air into the inner side of the stator 40 are each disposed at the upper faces of arc portions 41d of the core back portion 41a. The upper faces of the inclined members 46 face a later-described gap CL, as illustrated in Fig. 2. The inclined members 46 each have a shape where the thickness progressively becomes smaller from the outer side in the radial direction toward the inner side in the radial direction. The upper faces of the inclined members 46 are positioned progressively lower from the outer side in the radial direction toward the inner side in the radial direction. Thus, the air that has flowed into the gap CL can be guided downward, while being sent toward the inner side in the radial direction. The upper faces of the inclined members 46 are curved faces of which inclination as to the axial direction progressively becomes smaller from the outer side in the radial direction toward the inner side in the radial direction.

Note that the inclined members 46 may be part of the core back portion 41a, or may be part of the upper-side insulators 43, or may be part of the housing 20.

The upper-side insulators 43 are insulating members covering part of the upper face and side faces of the stator core 41, as illustrated in Fig. 5 and Fig. 6. The upper-side insulators 43 are provided corresponding to each of the three teeth portions 41b. The upper-side insulators 43 each have an upper-side outer peripheral wall portion 43a, an upper-side inner peripheral wall portion 43e, and an upper-side insulating portion 43d.

The upper-side outer peripheral wall portion 43a is positioned at the upper side from the core back portion 41a. The upper-side inner peripheral wall portion 43e is positioned at the upper side of the tip of the teeth portion 41b. The upper-side insulating portion 43d links the upper-side outer peripheral wall portion 43a and upper-side inner peripheral wall portion 43e in the radial direction, and is positioned at the upper side of a portion of the teeth portion 41b where the coil 42 is wound.

The lower-side insulators 44 are insulating members covering part of the lower face and side faces of the stator core 41. The lower-side insulators 44 are provided corresponding to each of the three teeth portions 41b. The lower-side insulators 44 each have a lower-side outer peripheral wall portion 44a, a lower-side inner peripheral wall portion 44c, and a lower-side insulating portion 44b.

The lower-side outer peripheral wall portion 44a is positioned at the lower side from the core back portion 41a. The lower-side inner peripheral wall portion 44c is positioned at the lower side of the tip of the teeth portion 41b. The lower-side insulating portion 44b links the lower-side outer peripheral wall portion 44a and lower-side inner peripheral wall portion 44c in the radial direction, and is positioned at the lower side of a portion of the teeth portion 41b where the coil 42 is wound.

The upper-side insulators 43 and lower-side insulators 44 sandwich the teeth portions 41b of the stator core 41 in the axial direction. The coils 42 are wound on the teeth portions 41b covered by the upper-side insulating portions 43d of the upper-side insulators 43 and the lower-side insulating portions 44b of the lower-side insulators 44. That is to say, the coils 42 are wound on the teeth portions 41b via the upper-side insulators 43 and lower-side insulators 44.

The three upper-side outer peripheral wall portions 43a positioned above the core back portion 41a of the stator core 41 encompass the coils 42 from the outside in the radial direction, at the upper side from the stator core 41, as illustrated in Fig. 5. An upper-side flat face 43f and an upper-side inclined protruding portion 43g are provided in tandem in the circumferential direction at a portion of the outer peripheral faces of the upper-side outer peripheral wall portion 43a positioned above the linear portion 41c. The upper-side flat face 43f is positioned at a second side face 43c side (rearward side in rotational direction, -θz side), and the upper-side inclined protruding portion 43g is positioned at a first side face 43b side (forward side in rotational direction, +θz side). An arc-shaped face that is disposed following the inner peripheral face of the housing 20 is disposed between the upper-side flat face 43f and the second side face 43c, as illustrated in Fig. 7. The outer side face of the upper-side inclined protruding portion 43g in the radial direction is an arc-shaped face following the inner peripheral face of the housing 20.

The upper-side flat face 43f extends in the axial direction, matching the outer peripheral face of the linear portion 41c of the stator core 41, as illustrated in Fig. 5. The upper-side inclined protruding portion 43g protrudes to the outer side in the radial direction as to the upper-side flat face 43f. The upper-side inclined protruding portion 43g also protrudes toward the lower side in the axial direction, and covers part of the linear portion 41c of the stator core 41 from the outer side in the radial direction. An axial-direction flat face 43j, and an upper-side guide inclined face 43h positioned at the lower side from the axial-direction flat face 43j, are provided on the side face of the upper-side inclined protruding portion 43g that is adjacent to the upper-side flat face 43f, i.e., at the face in the rearward side in rotational direction (-θz side). The upper-side guide inclined face 43h is progressively positioned at the lower side toward the forward side in rotational direction (+θz side). The upper-side guide inclined face 43h gradually faces the lower side the closer to the lower side it is. The inclination of the upper-side guide inclined face 43h as to the axial direction progressively increases the closer to the lower side it is. The axial-direction flat face 43j and upper-side guide inclined face 43h are smoothly connected.

The upper-side outer peripheral wall portions 43a that are adjacent in the circumferential direction are separated from each other by predetermined gaps, as illustrated in Fig. 7. In other words, the multiple upper-side outer peripheral wall portions 43a are arrayed with gaps CL therebetween in the circumferential direction. The gaps CL each have opening portions at both ends in the radial direction. The radially outer end portions of two upper-side outer peripheral wall portion 43a adjacent in the circumferential direction make up an outer-side opening portion 90 on the outer side of the gap CL in the radial direction. The radially inner end portions of two upper-side outer peripheral wall portion 43a adjacent in the circumferential direction make up an inner-side opening portion 91 on the inner side of the gap CL in the radial direction. The inner-side opening portion 91 is positioned between adjacent coils 42 in the circumferential direction.

The gaps CL are positioned on the inner side of the first through holes 26 of the housing 20 in the radial direction. The first through holes 26 connect to the outer-side opening portions 90. Accordingly, air flowing into the housing 20 from the first through holes 26 flows into the gaps LC from the outer-side opening portions 90. Air that has flowed into the gaps CL is discharged into air at the inner side from the core back portion 41a in the radial direction via the inner-side opening portions 91. That is to say, the first through holes 26 and gaps CL make up airflow paths guiding air flowing in from the outer side of the housing 20 in the radial direction to the inner side of the stator 40 in the radial direction. The air that has been guided into the inner side of the stator 40 in the radial direction passes the periphery of the coils 42 in a downward direction, and is discharged to the outside of the housing 20 from the lower lid through holes 22a. Accordingly, air passing through the baps can be efficiently guided to the coils 42, so the coils 42 that are heat generators can be cooled, and cooling efficiency of the stator 40 can be further improved.

Note that in the present specification, the expression that the first through holes connect to the outer-side opening portions, includes the first through holes and the outer-side opening portions at least partially overlapping in the radial direction, and at least part of the air passing through the first through holes passing through the outer-side opening portions. The first through holes 26 and outer-side opening portions 90 are adjacent to each other in Fig. 2 and Fig. 7. Note that the first through holes 26 and outer-side opening portions 90 may be disposed away from each other in the radial direction. In this case, the upper-side outer peripheral wall portions 43a are disposed away from the inner side face of the peripheral wall 21 to the inner side in the radial direction, and the gaps CL are disposed away from the first through holes 26 to the inner side in the radial direction, for example.

The upper-side outer peripheral wall portions 43a have the first side faces 43b and second side faces 43c that face the gaps CL and are inclined as to the radial direction, as illustrated in Fig. 7. Accordingly, air that has flowed into the gaps CL via the first through holes 26 can be smoothly guided following the first side faces 43b and second side faces 43c. Accordingly, loss of air can be reduced. Also, air that has flowed into the housing 20 from the gaps CL is readily guided to predetermined portions of the stator 40. Thus, air that has been discharged from the inner-side opening portions 91 of the gaps CL is readily fed to the coils 42 that generate the most heat in the stator 40, for example. Accordingly, the stator 40 is readily cooled.

In the present embodiment, the inner-side opening portions 91 are situated between coils 42 that are adjacent in the circumferential direction, so air discharged from the inner-side opening portions 91 is readily guided to the coils 42, as illustrated in Fig. 7. Accordingly, the cooling efficiency of the stator 40 can be further improved.

Also, the upper-side outer peripheral wall portions 43a are provided to the upper-side insulators 43, so there is no need to separately provide members having the first side face 43b and second side face 43c. This allows the number of parts of the blower 1 to be reduced.

The first side face 43b is a face of the upper-side outer peripheral wall portion 43a in the forward side in rotational direction (+θz side). The first side face 43b faces the outer side in the radial direction. The second side face 43c is a face of the upper-side outer peripheral wall portion 43a in the rearward side in rotational direction (-θz side). The second side face 43c faces the inner side in the radial direction.

Among adjacent upper-side outer peripheral wall portions 43a, the first side face 43b of one upper-side outer peripheral wall portion 43a and the second side face 43c of the other upper-side outer peripheral wall portion 43a are disposed facing each other in the circumferential direction across the gap CL.

The first side face 43b and second side face 43c are progressively positioned in the forward side in rotational direction (+θz side) of the impeller 70 from the outer side in the radial direction toward the inner side in the radial direction, in plan view. Now, air discharged from the impeller 70 is discharged in a direction inclined toward the forward side in rotational direction as to the radial direction, due to the impeller 70 rotating. Accordingly, air that has been discharged from the impeller 70 and guided downwards by the exhaust air guide portion 60 swirls toward the forward side in rotational direction. Thus, aid can be guided along the direction of the air swirling within the gaps CL due to the first side face 43b and second side face 43c being inclined toward the forward side in rotational direction of the impeller 70, toward the inner side in the radial direction. Loss of air at the time of flowing into the housing 20 can thus be further reduced.

Due to the first side faces 43b and second side faces 43c being inclined as described above, the direction of inclination of the gaps CL as viewed from above as to the radial direction (the direction from the outer side in the radial direction toward the inner side in the radial direction) matches the circumferential-direction flow direction of air discharged from the impeller 70 and flowing into the housing 20. That is to say, the direction of inclination of the gaps CL as to the radial direction as viewed from above matches the direction of rotation of the impeller 70. The gaps CL extend from the inner peripheral face of the peripheral wall 21 toward the coils 42. Accordingly, air passing through the gaps CL is more readily guided toward the coils 42. Accordingly, the cooling efficiency of the stator 40 can be further improved.

The inclination of the first side faces 43b as to the radial direction and the inclination of the second side faces 43c as to the radial direction differ from each other in plan view. More specifically, the inclination of the first side faces 43b as to the radial direction is greater than the inclination of the second side faces 43c as to the radial direction. Accordingly, the width at the outer-side opening portions 90 in the circumferential direction is greater than the width at the inner-side opening portions 91 in the circumferential direction. Forming the outer-side opening portions 90 at the inlet side of the gaps CL relatively larger than the inner-side opening portions 91 at the outlet side enables more air to be suctioned into the gaps CL from the first through holes 26, and relatively narrowing the width of the inner-side opening portions 91 at the venting side enables the air discharged from the gaps CL to be caused to flow toward target positions (coils 42) more accurately. Accordingly, the stator core 41 and coils 42 can be cooled more efficiently by air flowing in from the first through holes 26. Note that the inclination of the first side faces 43b as to the radial direction and the inclination of the second side faces 43c as to the radial direction may be the same.

Note that the first side faces 43b and second side faces 43c are curved faces in plan view. Accordingly, air can be smoothly guided at the gaps CL following the first side faces 43b and second side faces 43c. Note that the first side faces 43b and second side faces 43c may be flat faces.

Below the gaps CL are the inclined members 46 disposed above the core back portion 41a, as illustrated in Fig. 2. The inclined members 46 are sandwiched between the first side faces 43b and second side faces 43c. The upper faces of the inclined members 46 facing the gaps CL are positioned progressively lower from the outer side in the radial direction toward the inner side in the radial direction, as described above. Accordingly, the air that has flowed into the gaps CL via the first through holes 26 can be guided downward, while being sent toward the inner side in the radial direction. Loss of air can thus be reduced as compared to a case where air that has flowed into the gaps CL strikes the upper faces of the arc portions 41d without the inclined members 46 having been provided. The upper faces of the inclined members 46 also are curved faces of which inclination as to the axial direction progressively becomes smaller from the outer side in the radial direction toward the inner side in the radial direction, as described above. Accordingly, air can be smoothly guided by the upper face of the inclined members 46. Thus, loss of air can be further reduced.

The three lower-side outer peripheral wall portions 44a positioned at the lower side from the core back portion 41a illustrated in Fig. 6 encompass the coils 42 at the lower side of the stator core 41 from the outer side in the radial direction. Although there are gaps between lower-side outer peripheral wall portions 44a that are adjacent in the circumferential direction, the lower-side outer peripheral wall portions 44a may be in contact with each other in the circumferential direction.

Of the outer peripheral faces of the lower-side outer peripheral wall portions 44a, the portions positioned at the lower side from the linear portions 41c of the core back portion 41a each have a lower-side flat face 44d and a lower-side inclined protruding portion 44g provided in tandem in the circumferential direction, as illustrated in Fig. 5. The lower-side flat face 44d is positioned at the forward side in rotational direction (+θz side) of the lower-side inclined protruding portion 44g, and the lower-side inclined protruding portion 44g is positioned at the rearward side in rotational direction (-θz side) of the lower-side flat face 44d. Both sides in the circumferential direction of the region where the lower-side flat face 44d and lower-side inclined protruding portion 44g are provided, are provided with arc-shaped faces disposed following the inner peripheral face of the housing 20. The outer side face of the lower-side inclined protruding portion 44g in the radial direction is an arc-shaped face following the inner peripheral face of the housing 20.

The lower-side flat face 44d extends in the axial direction matching the outer peripheral face of the linear portion 41c. The lower-side inclined protruding portion 44g protrudes towards the outer side in the radial direction with regard to the lower-side flat face 44d. The lower-side inclined protruding portion 44g also covers part of the linear portion 41c of the stator core 41 protruding to the upper side in the axial direction from the outer side in the radial direction. An axial-direction flat face 44j, and a lower-side guiding inclined face 44h positioned at the upper side from the axial-direction flat face 44j, are disposed on a side face of the lower-side inclined protruding portion 44g adjacent to the lower-side flat face 44d, i.e., on the face at the forward side in rotational direction (+θz side). The lower-side guiding inclined face 44h is positioned progressively lower toward the forward side in rotational direction. The lower-side guiding inclined face 44h gradually faces toward the upper side the closer to the upper side it is. The inclination of the lower-side guiding inclined face 44h as to the axial direction progressively increases toward the upper side. The axial-direction flat face 44j and lower-side guiding inclined face 44h are smoothly connected.

The upper-side flat face 43f, the outer peripheral face of the linear portion 41c, and the lower-side flat face 44d are disposed continuously, making up a flat face that extends in the axial direction, as illustrated in Fig. 5 and Fig. 6. The face made up of the upper-side flat face 43f, outer peripheral face of the linear portion 41c, and lower-side flat face 44d, is disposed in approximate agreement with the notched portion 22b as viewed from the axial direction.

Flow paths FP extending in the axial direction are provided between the stator 40 and housing 20 in the radial direction, as illustrated in Fig. 2. The flow paths FP have vents at the lower side. The vents of the flow paths FP are the lower-side openings 24. The through holes 28 include the second through holes 25 that open to the flow paths FP. Accordingly, part of the air discharged from the impeller 70 flows into the flow paths FP via the second through holes 25. The air that has flowed into the flow paths FP flows downward through the flow paths FP. Accordingly, the stator 40 can be cooled by the air passing through the flow paths FP. The air that has flowed into the flow paths FP from the second through holes 25 is discharged downwards from the lower-side openings 24.

The flow paths FP include space between the inner face of the peripheral wall 21 and the upper-side flat faces 43f of the upper-side insulators 43, space between the inner face of the peripheral wall 21 and the linear portions 41c of the core back portion 41a, and space between the inner face of the peripheral wall 21 and the lower-side flat faces 44d of the lower-side insulators 44. That is to say, at least part of the outer side face of the core back portion 41a in the radial direction is exposed to the flow paths FP. Accordingly, air that has flowed into the flow paths FP from the second through holes 25 comes into direct contact with the core back portion 41a. Thus, the fooling efficiency of the stator core 41 can be further improved.

Multiple first through holes 26 and second through holes 25 are provided in an alternating manner in the circumferential direction in the present embodiment, as described above, so the stator core 41 can be cooled alternately in the circumferential direction from the inner side and outer side. Thus, the stator core 41 is readily cooled uniformly in the circumferential direction.

The lower-side inclined protruding portions 44g of the lower-side insulators 44 and the upper-side inclined protruding portions 43g of the upper-side insulators 43 are disposed in a staggered manner in the circumferential direction and axial direction, across gaps, as illustrated in Fig. 5. The lower-side guiding inclined faces 44h and upper-side guide inclined faces 43h face each other across gaps. The gaps between the lower-side guiding inclined faces 44h and upper-side guide inclined faces 43h are part of the flow paths FP between the stator 40 and housing 20.

Now, the upper-side guide inclined faces 43h and lower-side guiding inclined faces 44h are progressively positioned at the lower side toward the forward side in rotational direction (+θz side), as described above. That is to say, the upper-side guide inclined faces 43h and lower-side guiding inclined faces 44h are inclined faces following the flow of air that flows downward while swirling toward the forward side in rotational direction after having been discharged from the impeller 70. Accordingly, air flowing into the flow paths FP can be smoothly guided following the upper-side guide inclined faces 43h and lower-side guiding inclined faces 44h. Thus, loss of air flowing through the flow paths FP can be reduced, and the venting efficiency of the blower 1 can be improved.

Also, the air after being discharged from the impeller 70 flows downward while swirling toward the forward side in rotational direction, as described above. Accordingly, in a case of flowing into a flow path extending in the axial direction, the air does not readily pass through the upper portion toward the forward side in rotational direction and the lower portion toward the rearward side in rotational direction in the flow channel. Air is thus readily retained at the upper portion toward the forward side in rotational direction and the lower portion toward the rearward side in rotational direction in the flow channel and readily forms eddies, and there have been cases where loss of air has increased.

In contrast with this, according to the present embodiment, the upper-side inclined protruding portions 43g are positioned at the upper portion toward the forward side in rotational direction within the flow paths FP, and the lower-side inclined protruding portions 44g are positioned at the upper portion toward the forward side in rotational direction within the flow paths FP. Thus, the portions where air is readily retained in the flow paths FP are flossed off by the upper-side inclined protruding portion 43g and lower-side inclined protruding portion 44g. Accordingly, air passing through the flow paths FP can be suppressed from being retained, and loss of air can be reduced.

Multiple plate portions 45 that extend in the axial direction are provided to each lower-side flat face 44d, as illustrated in Fig. 2 and Fig. 5. The number of plate portions 45 is two in Fig. 5. The plate portions 45 are erected approximately perpendicular to the lower-side flat face 44d. The tips of the plate portions 45 at the outer side in the radial direction reach the inner peripheral face of the housing 20. The plate portions 45 section the region of the flow path FP between the lower-side outer peripheral wall portion 44a and the housing 20 into multiple regions in the circumferential direction. Accordingly, the air passing through the flow path FP can be rectified, and loss of air passing through the flow path FP can be reduced. As a result, the air blowing efficiency of the blower 1 can be improved.

The molded portion 47 is formed filling in a region of the stator 40 encompassed by the upper-side outer peripheral wall portions 43a of the upper-side insulators 43 and the lower-side outer peripheral wall portions 44a of the lower-side insulators 44, as illustrated in Fig. 5. The molded portion 47 reaches from the upper end of the upper-side insulators 43 to the lower end of the lower-side insulators 44 following the axial direction. The molded portion 47 is also provided with a molded through hole 47a through which the rotor 30 is passed. The molded portion 47 encompasses and strongly supports the coils 42, and also integrally holds the upper-side insulators 43, lower-side insulators 44, stator core 41, and sensor board 50.

Three groove-shaped exhaust guide holes 48 that reach from the upper side to the lower end are provided on the outer peripheral face of the molded portion 47. The groove-shaped exhaust guide holes 48 are covered by the core back portion 41a of the stator core 41 partway in the axial direction. The exhaust guide holes 48 have upper openings 48a positioned at the upper side of the core back portion 41a, as illustrated in Fig. 2. The upper openings 48a open to the outer side in the radial direction. The exhaust guide holes 48 have inclined faces 48c that smoothly incline toward the lower side at the inner side of the upper openings 48a in the radial direction. The exhaust guide holes 48 also have lower openings 48b positioned at the lower end face of the molded portion 47. The lower openings 48b open to the lower side. The lower openings 48b are positioned directly above the lower lid through holes 22a of the lower lid 22.

As illustrated in Fig. 5, the upper openings 48a of the exhaust guide holes 48 each face the three gaps CL of the first side faces 43b and second side faces 43c of the upper-side insulators 43. The width of the exhaust guide holes 48 matches the width of the inner-side opening portions 91 positioned on the inner side of the gaps CL in the radial direction, as illustrated in Fig. 7. Also, the exhaust guide holes 48 open from the outer peripheral face of the molded portion 47 and extend toward the lower side, as illustrated in Fig. 2. Note however, that the width of the exhaust guide holes 48 and the width of the inner-side opening portions 91 do not necessarily have to be the same width, and may be different widths.

Air discharged from the gaps CL to the inner side of the stator 40 in the radial direction is guided into the exhaust guide holes 48 from the upper openings 48a, and the direction of flow is directed toward the lower side following the inclined faces 48c. Further, the air passes through the interior of the exhaust guide holes 48 and is discharged at the lower side of the stator 40 via the lower openings 48b. Providing the exhaust guide holes 48 in the molded portion 47 enables the exhaust air flowing among the coils 42 to be smoothly discharged toward the lower side without turbulence, whereby the venting efficiency can be raised. Note that in a case where the stator 40 does not have a molded portion 47, members having the exhaust guide holes 48 may be displaced between the coils 42. Note that the lower openings 48b may have a shape where the cross-sectional area of the flow path progressively increases toward the lower side. According to this configuration, air passing through the exhaust guide holes 48 flows to the lower side more smoothly, so venting efficiency can be improved.

The air discharged to the lower side of the stator 40 via the lower openings 48b is discharged to the lower side of the motor 10 via the lower lid through holes 22a. That is to say, the lower lid through holes 22a serve as second vents 97 that discharge exhaust air that has passed through the exhaust guide holes 48 of the molded portion 47 to the lower side of the motor 10.

The sensor board 50 is disposed between the stator 40 and the lower lid 22, as illustrated in Fig. 2 and Fig. 6. The sensor board 50 has a ring-shaped main unit portion 50a, and three protruding portions 50b that protrude toward the outer side from the outer edge of the main unit portion 50a, in a direction inclined as to the radial direction. The main unit portion 50a has a hole through which the shaft 31 is passed. The sensor board 50 is fixed to the lower-side insulators 44.

The sensor board 50 has at least three rotary sensors 51 mounted thereupon, as illustrated in Fig. 2. The rotary sensors 51 may be Hall elements. The sensor board 50 may be electrically connected to the coils 42. In this case, a driving circuit that outputs driving signals to the coils 42 may be mounted on the sensor board 50.

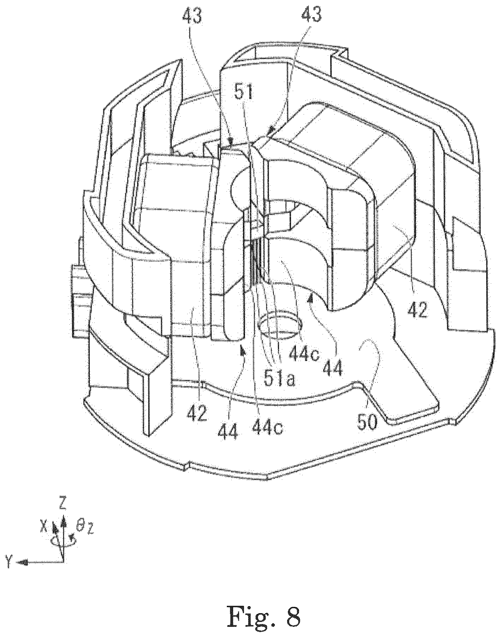

The rotary sensors 51 are disposed interposed between tip portions of lower-side inner peripheral wall portions 44c that are adjacent in the circumferential direction, as illustrated in Fig. 7 and Fig. 8. The three rotary sensors 51 are equidistantly disposed every 120° in the circumferential direction. The faces of the rotary sensors 51 on the inner side in the radial direction face the rotor magnet 33. The rotor magnet 33 is disposed at the center portion of the rotor 30 in the axial direction in the case of the present embodiment, as illustrated in Fig. 2. Accordingly, the rotary sensors 51 are connected to the sensor board 50 by leads 51a of a length corresponding to the length from the sensor board 50 to the rotor magnet 33 in the axial direction.

A mechanism that supports the rotary sensors 51 may be provided to the tip portion of the lower-side inner peripheral wall portions 44c. For example, recesses may be provided into which the rotary sensors 51 are inserted, thereby suppressing movement of the rotary sensors 51 in the radial direction. Alternatively, the rotary sensors 51 may be fixed to the lower-side inner peripheral wall portions 44c by snap-fitting or the like.

The notches 22b at the outer periphery of the lower lid 22 are disposed approximately matching the linear portions 41c of the stator core 41, the upper-side flat faces 43f of the upper-side insulators 43, and the lower-side flat faces 44d of the lower-side insulators 44, as viewed in the axial direction. The lower-side openings 24 at the lower face of the motor 10 serve as first vents 96 that discharge exhaust air that has passed through the flow paths FP between the stator 40 and housing 20, as illustrated in Fig. 2.

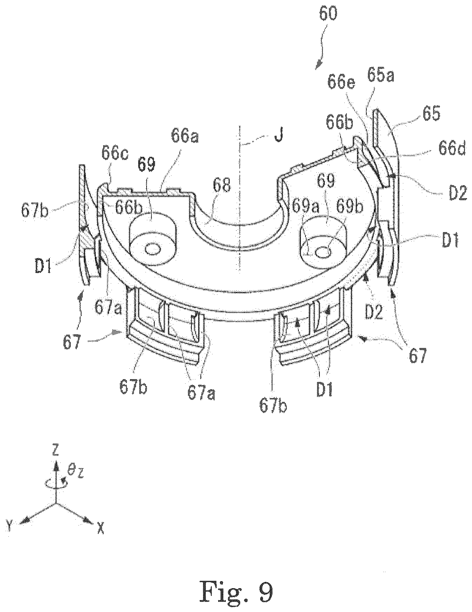

The exhaust air guide portion 60 is attached at the upper side from the housing 20, as illustrated in Fig. 2. The exhaust air guide portion 60 has a ring-shaped cover portion 66f, as illustrated in Fig. 9. Accordingly, the blower 1 further has the impeller housing 80 and ring-shaped cover portion 66f. The exhaust air guide portion 60 also has an outer periphery cylindrical portion 65 and inner guide portions 67. The ring-shaped cover portion 66f has a ring-shaped-cover flat portion 66a and a protruding portion 66c. The ring-shaped cover portion 66f has a ring-shaped partitioning ring 66b. The ring-shaped cover portion 66f is positioned at the upper side from the housing 20.

The ring-shaped-cover flat portion 66a extends in a direction orthogonal to the shaft 31, and faces a base portion 73 in the axial direction across a gap. The ring-shaped-cover flat portion 66a is a ring-shaped plate. The ring-shaped-cover flat portion 66a has a cylindrical attachment ring 68 that extends from the lower face of the middle portion toward the lower side, and three columnar protruding portions 69 that protrude from the lower face of the ring-shaped-cover flat portion 66a toward the lower side. The three columnar protruding portions 69 have the same diameters and heights, and are equidistantly disposed every 120° in the circumferential direction. The columnar protruding portions 69 are hollow in the present embodiment, and each have a protruding portion through hole 69b at the middle of an end face 69a at the lower side that passes through in the axial direction.

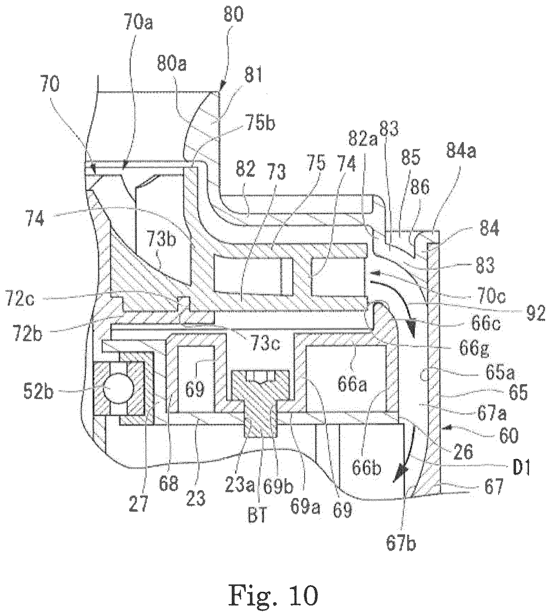

The upper-side bearing holding portion 27 of the housing 20 is inserted into the attachment ring 68 of the exhaust air guide portion 60, as illustrated in Fig. 10. The lower face of the attachment ring 68 of the exhaust air guide portion 60 and the end face 69a at the lower side of the columnar protruding portions 69 come into contact with the upper face of the upper lid portion 23 of the housing 20. The exhaust air guide portion 60 and the motor 10 are fixed by bolts BT passed through the protruding portion through holes 69b of the columnar protruding portions 69 and screw holes 23a in the upper lid portion 23.

The protruding portion 66c protrudes toward the upper side from the ring-shaped-cover flat portion 66a, at a further outer side in the radial direction than the outer end of the impeller 70 in the radial direction. The protruding portion 66c is a ring shape that protrudes toward the upper side from the outer edge of the ring-shaped-cover flat portion 66a. The outer side face of the protruding portion 66c in the radial direction has a protruding portion inclined face 66g that progressively is positioned at the lower side from the inner side in the radial direction toward the outer side in the radial direction. The protruding portion inclined face 66g is a curved face of which the inclination as to the axial direction progressively becomes smaller from the upper side toward the lower side. The lower end of the protruding portion inclined face 66g is smoothly connected to the outer peripheral face of the partitioning ring 66b.

The partitioning ring 66b is a cylindrical shape extending toward the lower side from the outer edge of the ring-shaped-cover flat portion 66a. The partitioning ring 66b is positioned at the upper side from the housing 20. The outer periphery cylindrical portion 65 encompasses the partitioning ring 66b from the outer side in the radial direction. The outer periphery cylindrical portion 65 is positioned on the outer side of the impeller 70 in the radial direction.

The partitioning ring 66b and outer periphery cylindrical portion 65 face each other in the radial direction across a gap. The gap between the partitioning ring 66b and outer periphery cylindrical portion 65 make up part of first guide paths D1 that guide exhaust air into the motor 10, and part of second guide paths D2 that discharge air to the periphery of the motor 10. The first guide paths D1 are positioned at locations in the circumferential direction where the inner guide portions 67 have been provided, and the second guide paths D2 are positioned between the inner guide portions 67 in the circumferential direction. Six each of the first guide paths D1 and second guide paths D2 are provided along the circumferential direction in the present embodiment.

The inner guide portions 67 extend downwards from the outer periphery cylindrical portion 65, as illustrated in Fig. 9. Multiple inner guide portions 67 are provided along the circumferential direction. The number of inner guide portions 67 in the present embodiment is six, for example. The inner guide portions 67 cover the outer side of the through holes 28 in the radial direction, as illustrated in Fig. 2. The multiple inner guide portions 67 each fit to the first through holes 26 or second through holes 25 of the housing 20, as illustrated in Fig. 1. Part of the air discharged from the impeller 70 is guided along the faces of the inner guide portions 67 on the inner side in the radial direction, and flows into the housing 20 via the first through holes 26 and second through holes 25.

Guide portion vents 95 that open to the outside of the exhaust air guide portion 60 are provided between inner guide portions 67 that are adjacent in the circumferential direction. Accordingly, part of the air discharged from the impeller 70 is caused to flow inside the housing 20 by being guided to the first through holes 26 and second through holes 25 by the inner guide portions 67, while another part of the air discharged from the impeller 70 can be discharged to the outside of the exhaust air guide portion 60 from the guide portion vents 95. Accordingly, the motor 10 can be cooled by air from both the inside and outside. Thus, the entire motor 10 is more readily cooled. Also, the resistance acting on the air can be reduced by part of the air passing over the outside of the motor 10, so efficiency of the blower 1 can be improved.

Also, in addition to enabling air to flow into the housing 20 while reducing loss of air by the through holes 28 passing through the housing 20 in the radial direction as described above, air can be made to flow into the housing 20 more efficiently by the inner guide portions 67. According to the above, a blower 1, having a structure that can improve cooling efficiency of the entire motor 10 while reducing air loss, can be provided according to the present embodiment.

The faces of the inner guide portions 67 on the outer side in the radial direction extend in the axial direction matching the outer peripheral face of the outer periphery cylindrical portion 65, as illustrated in Fig. 9 and Fig. 10. The faces of the inner guide portions 67 on the inner side in the radial direction have guide portion inclined faces 67b that progressively are positioned at the lower side from the outer side in the radial direction toward the inner side in the radial direction. Accordingly, air discharged from the impeller 70 can be smoothly guided following the guide portion inclined faces 67b, and loss of air flowing into the housing 20 via the through holes 28 can be further reduced.

The guide portion inclined faces 67b are curved faces that of which the inclination as to the axial direction progressively becomes larger from the outer side toward the inner side. Accordingly, air flowing following the guide portion inclined faces 67b can be made to flow into the housing 20 more smoothly. Thus, loss of air flowing into the housing 20 can be further reduced.

The exhaust air guide portion 60 has wall portions 67a that protrude from the guide portion inclined faces 67b toward the inner side in the radial direction, as illustrated in Fig. 9. Accordingly, inside of the first guide paths D1 can be sectioned in the circumferential direction by the wall portions 67a. Thus, air flowing through the first guide paths D1 can be rectified, and air can be efficiently guided to the through holes 28. Further, the strength of the inner guide portions 67 can be improved.

The wall portions 67a extend in the axial direction. The upper ends of the wall portions 67a link the partitioning ring 66b and the inner guide portions 67 in the radial direction. Multiple wall portions 67a are provided for one inner guide portion 67. Three wall portions 67a are provided to each inner guide portion 67 in Fig. 9. The wall portions 67a are provided at both ends of the guide portion inclined faces 67b in the circumferential direction, and at the middle of the guide portion inclined faces 67b in the circumferential direction. Note that the wall portions 67a may be inclined toward the forward side in rotational direction (+θz side) of the impeller 70 from the upper side toward the lower side. In this case, air including the swirling component in the direction of rotation of the impeller 70 can be guided to the through holes 28 even more efficiently.

Also, the circumferential-direction dimensions of the wall portions 67a positioned at the end portion in the rearward side in rotational direction (-θz side) may be made larger than the circumferential-direction dimensions of the wall portions 67a positioned at the end portion in the forward side in rotational direction (+θz side). Accordingly, the positions of the first guide paths D1 in the inner guide portions 67 can be disposed to the forward side in rotational direction than the centers of the inner guide portions 67. Accordingly, air swirling toward the forward side in rotational direction can be suppressed from being retained at the rearward side in rotational direction of the first guide paths D1, and consequently, loss of air passing through the first guide paths D1 can be reduced.

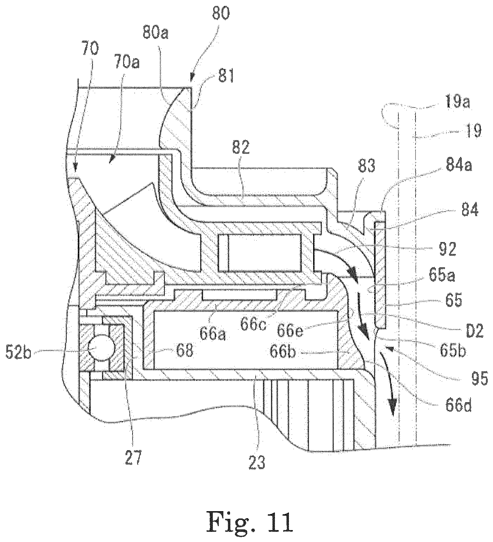

The second guide paths D2 that guide exhaust air discharged from the impeller 70 to the outer side in the radial direction and discharge to the outer side of the motor 10 are provided between the inner guide portions 67 in the circumferential direction, as illustrated in Fig. 9. The second guide paths D2 are positioned between an outer peripheral face 66e of the partitioning ring 66b and an inner peripheral face 65a of the outer periphery cylindrical portion 65, as illustrated in Fig. 11. The guide portion vents 95 are provided at the lower end of the second guide paths D2. The guide portion vents 95 turn the air that has passed through the second guide paths D2 downward, and discharge to the outer side of the motor 10. This air flows between the outer peripheral face of the motor 10 and an inner peripheral face 19a of a casing 19 that accommodates the motor 10, and finally is discharged from a later-described final vent 17b (see Fig. 2).

The outer peripheral face 66e of the partitioning ring 66b has an inner-side inclined portion 66d that progressively hangs out toward the outer side in the radial direction the closer to the lower side it is, as illustrated in Fig. 11. On the other hand, the inner peripheral face 65a of the outer periphery cylindrical portion 65 has an outer-side inclined portion 65b where the thickness of the outer periphery cylindrical portion 65 is thinner at the lower end. Due to these inner-side inclined portion 66d and outer-side inclined portion 65b being provided, the second guide paths D2 travel to the outer side in the radial direction while maintaining the width in the radial direction as they head toward the lower side. The cross-sectional area of the second guide paths D2 in places perpendicular to the axial direction gradually increases the closer to the guide portion vents 95. Accordingly, the discharge sound of air being discharged from the guide portion vents 95 can be reduced. Also, the discharge efficiency at the time of air being discharged from the guide portion vents 95 is improved.

The impeller 70 discharges fluid suctioned from an intake port 70a that is opened toward the upper side, toward the outer side in the radial direction via internal flow paths, as illustrated in Fig. 2. The impeller 70 has an impeller main body 71 and an impeller hub 72.

The impeller main body 71 has a base portion 73, multiple moving blades 74, and a shroud 75. That is to say, the impeller 70 has the base portion 73 and multiple moving blades 74. The base portion 73 extends in a direction orthogonal to the shaft 31. The base portion 73 is disc-shaped, and has a base portion through hole 73a passing through in the vertical direction at the middle portion. The perimeter of the base portion through hole 73a is an inclined portion 73b that has a conical face shape extending at the upper side.

The multiple moving blades 74 are positioned on the upper face of the base portion 73. The moving blades 74 are plate-shaped members curved in the circumferential direction, that extend from the inner side in the radial direction toward the outer side on the upper face of the base portion 73. The moving blades 74 are disposed erected following the axial direction. The shroud 75 is a cylindrical shape that tapers toward the upper side in the axial direction. An opening portion at the middle of the shroud 75 is the intake port 70a of the impeller 70. The base portion 73 and shroud 75 are linked by the moving blades 74.

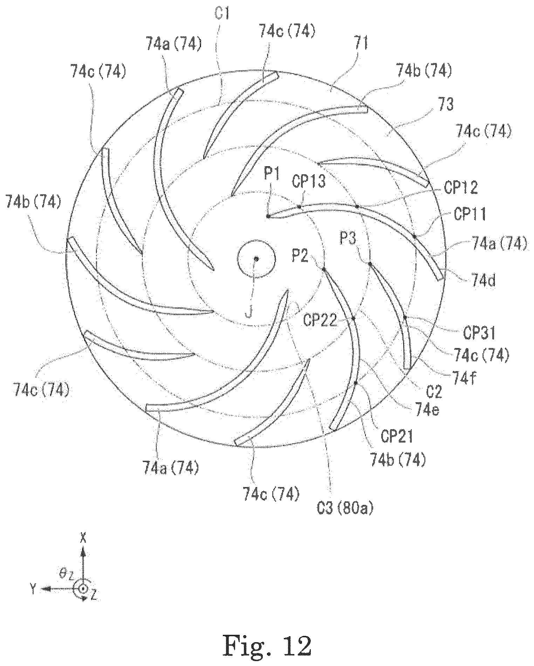

The multiple moving blades 74 are disposed following the circumferential direction (θz direction) on the upper face of the base portion 73, as illustrated in Fig. 12. The moving blades 74 are erected perpendicularly from the upper face of the base portion 73 following the axial direction, as illustrated in Fig. 2.

In the present embodiment, three types of moving blades 74 are disposed, with the same types of moving blades being equidistantly disposed in the circumferential direction. The multiple moving blades 74 in the present embodiment include multiple (three) first moving blades 74a, multiple (three) second moving blades 74b, and multiple (six) third moving blades 74c. The three first moving blades 74a are disposed at equidistantly every 120° in the circumferential direction. The second moving blades 74b are each disposed at intermediate positions between first moving blades 74a adjacent in the circumferential direction. The three second moving blades 74b are also disposed equidistantly every 120° in the circumferential direction. The third moving blades 74c are each disposed at intermediate positions between first moving blades 74a and second moving blades 74b adjacent in the circumferential direction. The six third moving blades 74c are disposed equidistantly every 60° in the circumferential direction.

The moving blades 74 extend on the upper face of the base portion 73 having a curvature in plan view (XY plane view). One end of the moving blades 74 is positioned on an outer edge of the base portion 73. The other end of each moving blade 74 is positioned on the inner side of the outer edge of the base portion 73 in the radial direction.

That is to say, the end portions of each of the first moving blades 74a, the second moving blades 74b, and the third moving blades 74c, at the outer side in the radial direction, are all positioned on the outer edge of the base portion 73. On the other hand, end portions P1 of the first moving blades 74a on the inner side are positioned closest to the center of the base portion 73. End portions P2 of the second moving blades 74b on the inner side are positioned on the outer side in the radial direction from the end portions P1 of the first moving blades 74a. End portions P3 of the third moving blades 74c on the inner side are positioned further on the outer side in the radial direction from the end portions P2 of the second moving blades 74b.

The first moving blades 74a, the second moving blades 74b, and the third moving blades 74c, each have a shape that is curved like a bow in a counterclockwise direction.

The first moving blades 74a are each formed of four arcs that are different in radius of curvature. A projecting blade face 74d of the first moving blades 74a has three inflection points CP11, CP12, and CP13, in the longitudinal direction.

The second moving blades 74b are each formed of three arcs that are different in radius of curvature. A projecting blade face 74e of the second moving blades 74b has two inflection points CP21 and CP22 in the longitudinal direction.

The third moving blades 74c are each formed of two arcs that are different in radius of curvature. A projecting blade face 74f of the third moving blades 74c has one inflection point CP31 in the longitudinal direction.

In the present embodiment, the inflection point CP11 of each first moving blade 74a, the inflection point CP21 of each second moving blade 74b, and the inflection point CP31 of each third moving blade 74c, are each disposed at the same radius position C1 on the base portion 73. Further, the radius of curvature of a portion of each first moving blade 74a that is further on the outer side of the radial position C1, the radius of curvature of a portion of each second moving blade 74b that is further on the outer side of the radial position C1, and the radius of curvature of a portion of each third moving blade 74c that is further on the outer side of the radial position C1, are the same as each other.

Next, the inflection point CP12 of each first moving blade 74a, the inflection point CP22 of each second moving blade 74b, and the end portion P3 of each third moving blade 74c are each disposed at the same radius position C2 on the base portion 73. Further, the radius of curvature of a portion of each first moving blade 74a that is disposed between the radial positions C1 and C2, the radius of curvature of a portion of each second moving blade 74b disposed between the radial positions C1 and C2, and the radius of curvature of a portion of each third moving blade 74c that is disposed between the radial positions C1 and C2, are the same as each other.

Next, the inflection point CP13 of each first moving blade 74a and the end portion P2 of each second moving blade 74b are disposed at the same radius position C3 on the base portion 73. Further, the radius of curvature of a portion of each first moving blade 74a that is disposed between the radial positions C2 and C3 and the radius of curvature of a portion of each second moving blade 74b disposed between the radial positions C2 and C3 are the same as each other.

The radius of curvature of the blade faces 74d to 74f of the moving blades 74 (74a through 74c) in the present embodiment are different for each region of the impeller 70 in the radial direction. Meanwhile, portions of different types of moving blades 74 (the first moving blades 74a through third moving blades 74c) that belong to the same region in the radial direction are set to have the same radius of curvature.

In the present embodiment, the radial position C3 agrees with the intake port 80a of the impeller housing 80 as seen in the axial direction. Accordingly, only the portions of the first moving blades 74a further on the inner side than the inflection point CP13 are disposed inward of the intake port 80a.

The impeller hub 72 includes a cylindrical portion 72a that extends in the axial direction, a disc-shaped flange portion 72b that extends outwards in the radial direction from the lower portion of the outer face of the cylindrical portion 72a, and multiple projecting portions 72c that protrude upwards from the upper face of the flange portion 72b. The cylindrical portion 72a includes a tapered inclined face portion 72d that becomes tapered toward the tip portion at the upper side.

The impeller hub 72 is attached to the impeller main body 71 by inserting the cylindrical portion 72a into the base portion through hole 73a from the lower side. The cylindrical portion 72a may be press-fitted into the base portion through hole 73a, or may be fixed using an adhesive agent or the like. The flange portion 72b of the impeller hub 72 supports the impeller main body 71 from the lower side. The projecting portions 72c on the flange portion 72b are fitted into recesses 73c on the lower face of the base portion 73. Fitting the projecting portions 72c into the recesses 73c suppresses relative movement of the impeller main body 71 and the impeller hub 72 in the circumferential direction.

Due to the impeller hub 72 including the flange portion 72b, the flange portion 72b can support the impeller main body 71 over a wide area in the radial direction from below. Accordingly, the impeller 70 can be held in a stable manner, and stability at the time of high-speed rotation is increased.

The inclined face portion 72d at the tip of the cylindrical portion 72a of the impeller hub 72 and the inclined face portion 73b of the base portion 73 are smoothly connected to each other in the axial direction in the impeller 70. The inclined face portion 72d and the inclined face portion 73b make up a ring-shaped inclined face 70b that guides fluid suctioned from the intake port 70a of the impeller 70 to the outer side in the radial direction.

Configuring the ring-shaped inclined face 70b from the impeller main body 71 and the impeller hub 72 enables the maximum height of the ring-shaped inclined face 70b to be increased by increasing the length of the cylindrical portion 72a (inclined face portion 72d) without increasing the height of the inclined face portion 73b of the base portion 73. Accordingly, a ring-shaped inclined face 70b having a preferable shape can be realized while suppressing increase in thickness of the base portion 73.

The impeller hub 72 is preferably made of metal. In this case, the shaft 31 and the impeller 70 can be strongly linked to each other. Accordingly, the impeller 70 can be rotated at high speeds in a stable manner. Moreover, a metal face can be used as the inclined face portion 72d, and accordingly the surface of the upper tip of the ring-shaped inclined face 70b can be smoothed.

The impeller 70 is fixed to the shaft 31 by fitting the upper end portion of the shaft 31 into the cylindrical portion 72a of the impeller hub 72 from the lower side. As illustrated in Fig. 2, the impeller 70 connected to the shaft 31 is disposed at the inner side of the ring-shaped protruding portion 66c of the exhaust air guide portion 60. Accordingly, the protruding portion 66c is disposed nearby a vent 70c of the impeller 70.

The protruding portion 66c guides exhaust air discharged from the impeller 70 to the lower side, along with a later-described exhaust air guide 83 of the impeller housing 80. In the present embodiment, the outer peripheral face of the ring-shaped protruding portion 66c is an inclined face that is inclined downwards the further on the outer side in the radial direction it is. The outer peripheral face of the protruding portion 66c is a smooth convex curved shape toward the outer side.

The lower end of the outer peripheral face of the protruding portion 66c is smoothly connected to the outer peripheral face of the cylindrical partitioning ring 66b. Accordingly, the inclination angle as to a direction perpendicular to the axial direction is approximately 90° at the lower end of the protruding portion 66c. The upper end of the protruding portion 66c is positioned on the immediately outer side in the radial direction of the outer edge of the base portion 73 of the impeller 70. The upper end of the protruding portion 66c is positioned at the upper side from the lower face of the base portion 73, but is positioned at the lower side from the upper face of the outer edge of the base portion 73.

In the blower 1 according to the present embodiment, air discharged from the impeller 70 can be smoothly guided downwards without turbulence in the flow, due to the protruding portion 66c having the above-described shape and placement. At the lower end of the vent 70c of the impeller 70, air is discharged from the outer edge of the base portion 73 in a direction approximately perpendicular to the axial direction. The upper end of the protruding portion 66c is at a position lower than the upper face of the base portion 73 in the present embodiment, so the discharged air is guided following the outer peripheral face of the protruding portion 66c without colliding with the protruding portion 66c. Accordingly, air can be conveyed efficiently.

The impeller housing 80 has the intake port 80a on the upper side, and has the shape of a cylinder that is tapered toward the upper side in the axial direction, as illustrated in Fig. 2. The impeller housing 80 encompasses above and the outer side in the radial direction of the impeller 70, and is fixed to the upper portion of the exhaust air guide portion 60. The impeller housing 80 has an intake guide portion 81 positioned at the opening end of the intake port 80a, and an impeller housing main body 82 that accommodates the impeller 70.

The impeller housing main body 82 has a cross-sectional shape modeled after that of the shroud 75 of the impeller 70. The inner face (lower face) of the impeller housing main body 82 faces the outer face (upper face) of the shroud 75 across a uniform spacing.

The ring-shaped intake guide portion 81 that protrudes toward the inner side in the radial direction is positioned on the upper end of the inner peripheral side of the impeller housing main body 82. The intake guide portion 81 covers an upper end face 75b of the shroud 75 from above, as illustrated in Fig. 10. A narrow gap runs in the radial direction between the lower face of the intake guide portion 81 and the upper end face 75b of the shroud 75.

A peripheral edge bend portion 82a, bent to wrap around the outer peripheral end of the shroud 75 to the lower side, is provided to the end of the impeller housing main body 82 at the outer peripheral side. The peripheral edge bend portion 82a extends to the lower side and encompasses the outer side end face of the shroud 75 from the outer side in the radial direction. A narrow gap extending to the upper side in the axial direction runs between the inner peripheral face of the peripheral edge bend portion 82a and the outer side end face of the shroud 75.

The impeller housing 80 has a ring-shaped exhaust air guide 83 extending toward the outer side in the radial direction and toward the lower side, at the outer side in the radial direction from the outer end of the impeller 70 in the radial direction, as illustrated in Fig. 2 and Fig. 3. The exhaust air guide 83 extends from the outer peripheral edge of the impeller housing main body 82 toward the outer side in the radial direction and toward the lower side, in a form like a skirt.

The exhaust air guide 83 makes up an exhaust air flow path 92 that guides exhaust air, discharged to the outer side in the radial direction from the impeller 70, toward the lower side, as illustrated in Fig. 10 and Fig. 11. The inner peripheral face of the exhaust air guide 83 smoothly inclines from a direction perpendicular to the axial direction toward the axial direction, from the upper end toward the lower end. The inner peripheral face of the exhaust air guide 83 is gently connected at the lower end to the inner peripheral face 65a of the outer peripheral cylindrical portion 65 of the exhaust air guide portion 60, thereby making up a wall face at the outer peripheral side of the exhaust air flow path 92. The protruding portion inclined face 66g and the inner peripheral face of the exhaust air guide 83 face each other across a gap. The gap between the protruding portion inclined face 66g and the inner peripheral face of the exhaust air guide 83 is part of the exhaust air flow path 92.

The impeller housing 80 has an outer periphery attachment ring 84 that extends toward the upper side from the outer peripheral edge of the exhaust air guide 83, as illustrated in Fig. 2 and Fig. 3. The outer periphery attachment ring 84 is cylindrical in shape, as illustrated in Fig. 10. The outer periphery attachment ring 84 has a flange portion 84a extending from the upper end toward the outer side in the radial direction. The outer peripheral face of the outer periphery attachment ring 84 fits to the inner peripheral face of the outer periphery cylindrical portion 65 of the exhaust air guide portion 60. The flange portion 84a also comes into contact with the upper end of the outer periphery cylindrical portion 65 and positions the impeller housing 80 as to the exhaust air guide portion 60 in the axial direction.

A recess 86 that extends in the circumferential direction is provided on the upper face of the exhaust air guide 83. The recess 86 is made up of the peripheral edge bend portion 82a, exhaust air guide 83, and outer periphery attachment ring 84. The thickness of the exhaust air guide 83 is made uniform due to the recess 86 having been provided to the impeller housing 80. Moreover, ribs 85 that connect the outer periphery attachment ring 84 to the peripheral edge bend portion 82a of the impeller housing main body 82 in the radial direction are provided in the recess 86, as illustrated in Fig. 3.

The impeller housing 80 is produced by molding. That is to say, the impeller housing 80 is manufactured by injecting a material in a fluid state into a cavity between two or more molds, which is then hardened. The impeller housing 80 according to the present embodiment is made of a resin material, and is fabricated by injection molding. In a case of forming the impeller housing 80 of an aluminum alloy, the impeller housing 80 is fabricated by aluminum die-casting. The molded article manufactured by molding may exhibit sink marks on the surface of thick portions, due to shrinkage when the material hardens, and this may deteriorate dimensional precision. In the case of performing aluminum die-casting, air pockets (cavities) may occur within thick portions, and this may deteriorate strength.

The recess 86 is provided between the outer periphery attachment ring 84 and the peripheral edge bend portion 82a of the impeller housing main body 82 of the impeller housing 80 according to the present embodiment. Thus, the thickness of the exhaust air guide 83 can be made uniform in the impeller housing 80, thereby suppressing occurrence of sink marks from occurring on the periphery of the exhaust air guide 83. In the same way, air pockets can be suppressed from occurring within the exhaust air guide 83 of the impeller housing 80. Further, the ribs 85 are provided to the recess 86 of the impeller housing 80 according to the present embodiment, so rigidity of the outer periphery attachment ring 84 as to the impeller housing main body 82 can be increased. Accordingly, the impeller housing 80 can be strongly fixed to the exhaust air guide portion 60 at the outer periphery attachment ring 84.

The board case 15 is attached to the lower side of the motor 10, and encompasses the control board 11, as illustrated in Fig. 1 and Fig. 2. The board case 15 is made of non-flammable resin. Examples of non-flammable resin include polyvinyl chloride, non-flammable polyethylene, and so forth. The board case 15 has a disc-shaped base wall 16, and a cylindrical portion 17 that extends upward from the outer edge of the base wall 16. The cylindrical portion 17 is provided with the final vent 17b that passes through the board case 15 in the radial direction so the inner side and the outer side communicate. The final vent 17b merges and discharges air discharged from the above-described vents (first vents 96, second vents 97, and guide portion vents 95) .

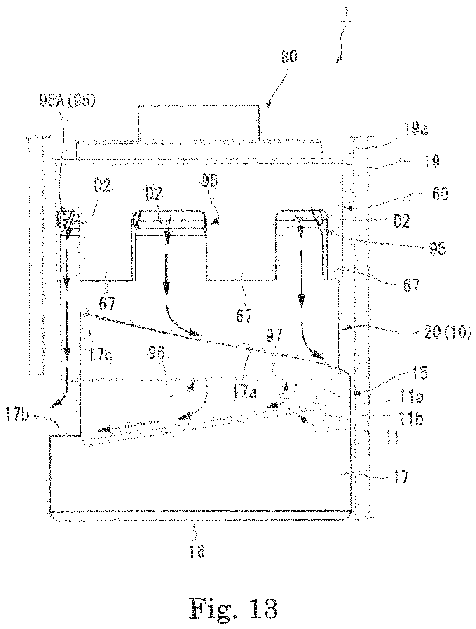

An upper end face 17a of the cylindrical portion 17 is inclined in a spiral form centered on the central axis J, as illustrated in Fig. 1 and Fig. 13. The upper end face 17a progressively inclines in the same direction as the rotation direction of the impeller 70 toward the lower side. The final vent 17b is positioned at the lower end side of the spiral of the upper end face 17a. Air discharged from the guide portion vents 95 of the exhaust air guide portion 60 flows downwards between the outer peripheral face of the motor 10 and the inner peripheral face 19a of the casing 19 accommodating the motor 10. Upon reaching the upper end face 17a of the cylindrical portion 17, this air follows the incline of the upper end face 17, swirls and reaches the final vent 17b, and is discharged. The upper end face 17a guides air including the swirling component that is discharged obliquely downwards from the guide portion vents 95 to the final vent 17b without changing the direction of flow at an abrupt angle, so deterioration of venting efficiency can be reduced.

At least one guide portion vent 95 of the multiple guide portion vents 95 is positioned directly above the final vent 17b. The guide portion vent 95 that is positioned directly above the final vent 17b will be referred to as a direct-above vent 95A here. An uppermost end 17c of the upper end face 17a is positioned at the lower side of the inner guide portion 67 in the present embodiment. Accordingly, air discharged from the direct-above vent 95A is not guided to the upper end face 17a, but rather passes over a distance that is shorter than being guided to the upper end face 17a and is discharged from the final vent 17b, and thus can improve the discharge efficiency from the direct-above vent 95A.

The upper end face 17a in the present embodiment has been exemplarily illustrated with regard to a case where the inclination along the circumferential direction is constant. However, the upper end face 17a may be an inclined face of which the inclination changes along the circumferential direction. In this case, the upper end face 17a preferably is an inclined face where the angle of inclination gradually becomes gentler from the upper side toward the lower side. For example, the upper end face 17a may be a curved face that is convex toward the lower side, with the radial center of curvature of the curved face that the upper end face makes up being positioned at the upper side from the upper end face 17a. Accordingly, air flowing toward the lower side may be made to gradually swirl following the upper end face 17a, and be guided to the final vent 17b, whereby discharge efficiency can be improved.

The control board 11 illustrated in Fig. 2 is connected to coil lines extending from the coils 42, and the sensor board 50, and controls the motor 10. The control board 11 is attached to the lower side of the motor 10 in a stage of being inclined as to the lower lid 22, via multiple (three in the present embodiment) post-shaped members 13 fixed to the lower lid 22. The post-shaped members 13 are fixed by screwing to screw holes 22d in the lower lid 22. The multiple post-shaped members 13 each have different heights. Also, inclined faces are provided to the lower end faces of the post-shaped members 13. The control board 11 is fixed by screwing to the lower side end faces of the post-shaped members 13 via spacers 13a.

The control board 11 is inclined toward the final vent 17b of the board case 15, within the board case 15. That is to say, the lowest point of the control board 11 is positioned toward the final vent 17b side.

Air that has passed through the interior of the motor 10 and been discharged to the lower side of the motor 10 from the first vents 96 and second vents 97 strikes the control board 11 and cools the control board 11. Further, air that has struck an upper face 11a of the control board 11 is smoothly discharged to the final vent 17b following the inclination of the control board 11. That is to say, venting efficiency can be increased due to the control board 11 being inclined toward the final vent 17b. Further, the projection area of the control board 11 as viewed from the axial direction can be reduced by disposing the control board 11 in an inclined manner. Accordingly, the gap between the outer edge of the control board 11 and the inner peripheral face of the cylindrical portion 17 of the board case 15 can be increased to let air flow to a lower face 11b side of the control board 11. Accordingly, even in a case where mounted parts that generate a great amount of heat, such as capacitors or the like, are mounted on the lower face 11b of the control board 11, these can be efficiently cooled.

The position of the control board 11 in the axial direction preferably is close to the motor 10, within a range where there is no interference between the upper face 11a of the control board 11 and the mounted parts mounted on the upper face 11a, and the lower lid 22 of the motor 10. Accordingly, not only is the cooling efficiency of the control board 11 improved, but also the effect of the exhaust air being guided to the final vent 17b due to the inclination of the control board 11 can be increased.

The blower 1 according to the present embodiment draws air into the impeller 70 from the intake 80a by rotating the impeller 70 by the motor 10, and discharges air to the outer side in the radial direction via air flow paths within the impeller 70, as illustrated in Fig. 2. The air discharged from the impeller 70 passes through the exhaust air flow path 92 and flows into the exhaust air guide portion 60. The exhaust air flow path 92 is positioned between the inner peripheral face of the exhaust air guide 83 of the impeller housing 80 and the outer peripheral face of the protruding portion 66c, and directs air, discharged toward the outer side in the radial direction by the impeller 70, toward the lower side. The exhaust air flowing toward the lower side of the exhaust air flow path 92 is branched into and flows through first guide paths D1 and second guide paths D2 alternately positioned in the circumferential direction of the exhaust air guide portion 60.

The air passing through the first guide paths D1 is guided to the inner side in the radial direction by the guide portion inclined faces 67b of the inner guide portion 67 and also is rectified by the wall portions 67a, and flows into the motor 10 from the through holes 28, as illustrated in Fig. 10.

Exhaust air that has flowed into the motor 10 via the second through holes 25 flows into the flow paths FP between the stator 40 and housing 20 illustrated in Fig. 7. The air flows downstream through the flow paths FP. The exhaust air that has flowed through the flow paths FP is discharged downwards from the lower-side openings 24 serving as the first vents 96.

Air that has flowed into the motor 10 via the first through holes 26 flows to the inner side of the stator 40 via gaps CL, as illustrated in Fig. 7. The inclined members 46 having the first side face 43b and second side face 43c encompassing the gaps CL guides the air passing through the gaps CL to the exhaust guide holes 48 of the molded portion 47. According to this configuration, the coils 42, which are heat generators in the motor 10, can be cooled. In addition, the air can be efficiently guided to the lower side by the exhaust guide holes 48 of the molded portion 47. Air discharged to the lower side from the exhaust guide holes 48 is discharged downwards from the lower lid through holes 22a serving as the second vents 97, and is discharged to the outside of the blower 1 from the final vent 17b.

On the other hand, air passing through the second guide paths D2 moves to the outer side in the radial direction due to the inner-side inclined portion 66d of the partitioning ring 66b, and is discharged to the lower side via the guide portion vents 95, as illustrated in Fig. 11. The air discharged to the lower side from the guide portion vents 95 flows toward the lower side following the outer peripheral face of the housing 20 of the motor 10. Part of the air that flows along the outer peripheral face of the housing 20 swirls in spiral form following the upper end face 17a of the board case 15, and is guided to the final vent 17b and discharged, as illustrated in Fig. 13.

The present invention is not restricted to the above-described embodiment, and other configurations may be employed. In the following description, components that are the same as those in the above description may be omitted from description by denoting with the same reference symbols as appropriate.

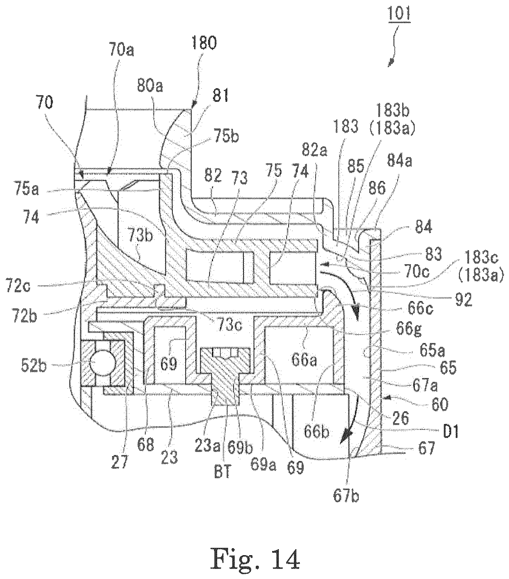

The blower may have a configuration of the blower 101 illustrated in Fig. 14. In an impeller housing 180, an exhaust air guide 183 has a guide-portion inner-side recess 183b of which an inner peripheral face 183a is recessed, and a guide-portion inner-side protruding portion 183c which is positioned to the lower side from the guide-portion inner-side recess 183b and of which the inner peripheral face 183a bulges, as illustrated in Fig. 14.

Note that in the present specification, the expression that an inner peripheral face is recessed includes part of an inner peripheral face curving outwards. Also, in the present specification, the expression that an inner peripheral face bulges includes part of an inner peripheral face curving inwards.

The inner side face of the guide-portion inner-side recess 183b is progressively positioned toward the lower side from the inner side in the radial direction toward the outer side in the radial direction. The inner side face of the guide-portion inner-side recess 183b is a curved face of which the inclination as to the axial direction progressively becomes smaller from the inner side in the radial direction toward the outer side in the radial direction. The guide-portion inner-side recess 183b is a ring shape extending in the circumferential direction.

The guide-portion inner-side protruding portion 183c is positioned further toward the outer side in the radial direction than the guide-portion inner-side recess 183b. The guide-portion inner-side protruding portion 183c is adjacent to the outer side of the guide-portion inner-side recess 183b in the radial direction in Fig. 14. The protruding face (inner side face) of the guide-portion inner-side protruding portion 183c is progressively positioned toward the lower side from the inner side in the radial direction toward the outer side in the radial direction. The protruding face of the guide-portion inner-side protruding portion 183c is a curved face of which the inclination as to the axial direction progressively becomes greater from the inner side in the radial direction toward the outer side in the radial direction. The guide-portion inner-side protruding portion 183c is a ring shape extending in the circumferential direction.

The distance between the protruding portion inclined face 66g and the inner peripheral face 183a of the exhaust air guide 183 is the shortest in the region where the protruding portion inclined face 66g and guide-portion inner-side protruding portion 183c face each other. Accordingly, the cross-sectional area of the exhaust air flow path 92 can be reduced partway along the exhaust air flow path 92 through which the air passes, thereby compressing the air passing through the exhaust air flow path 92 and increasing static pressure. Thus, separation of air at the inner peripheral face 183a of the exhaust air guide 183 and protruding portion inclined face 66g when passing through the exhaust air flow path 92 can be suppressed. Accordingly, occurrence of turbulence within the exhaust air flow path 92 is suppressed, and air can be efficiently guided within the exhaust air flow path 92. As a result, the efficiency of the blower 101 can be improved.

Note that the guide-portion inner-side recess 183b and guide-portion inner-side protruding portion 183c may each be provided at one part in the circumferential direction, or multiple thereof may be provided in the circumferential direction. The shapes of the guide-portion inner-side recess 183b and guide-portion inner-side protruding portion 183c are not restricted in particular. The inner side face of the guide-portion inner-side recess 183b and the protruding face of the guide-portion inner-side protruding portion 183c may be flat faces. Further, the guide-portion inner-side recess 183b and guide-portion inner-side protruding portion 183c may be disposed away from each other.

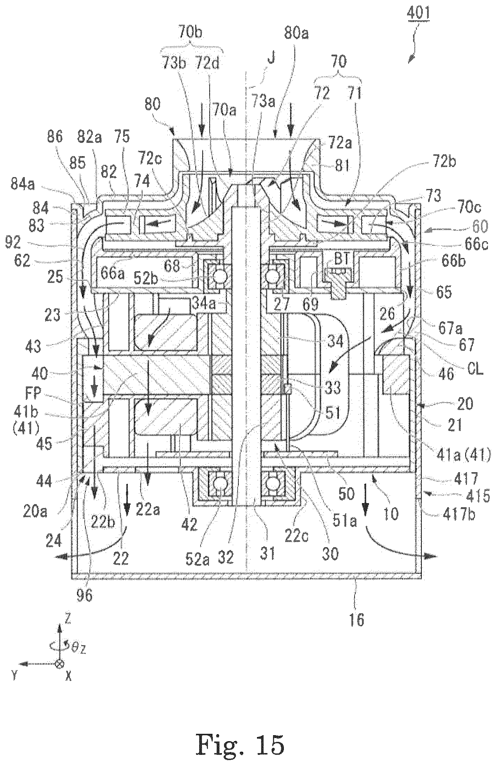

The blower may have the configuration of the blower 401 illustrated in Fig. 15. The upper end of a cylindrical portion 417 at a board case 415 extends to the lower end of the inner guide portion 67 in the axial direction, as illustrated in Fig. 15. The position of the upper end of the cylindrical portion 417 in the axial direction is the same over a full circle in the circumferential direction. The upper end of the cylindrical portion 417 is connected to the lower end of the inner guide portion 67. The exhaust air guide portion 60 and board case 415 are configured as a single member in Fig. 15. A final vent 417b passes through the cylindrical portion 417 in the radial direction. The final vent 417b is positioned at the lower end of the cylindrical portion 417. Multiple (two in Fig. 15) final vents 417b are provided in the circumferential direction in Fig. 15.

Unlike the blower 1, no molded portion 47 is provided in the blower 401. Accordingly, the air flowing into the housing 20 directly strikes the coils 42 and stator core 41, and the stator 40 is readily cooled.

### <Second Embodiment>

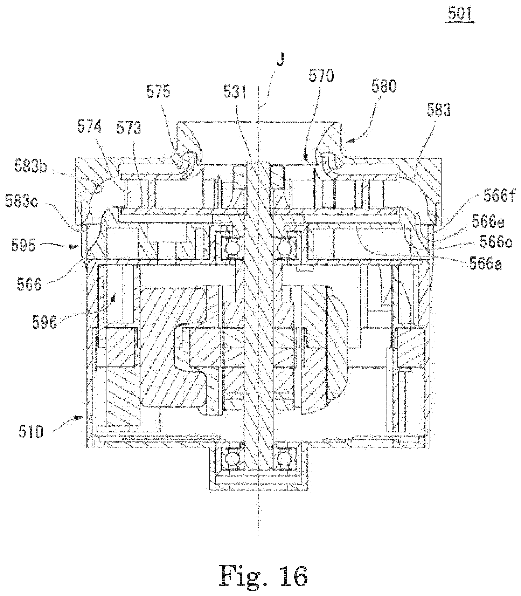

The blower 501 includes a motor 510, a ring-shaped cover portion 566, an impeller 570, and an impeller housing 580, as illustrated in Fig. 16. The motor 510 includes a shaft 531 disposed along the central axis J extending in the vertical direction. The outer end of the motor 510 in the radial direction is positioned on the outer side in the radial direction of the outer end of the impeller 570 in the radial direction.

The impeller 570 is fixed to the shaft 531. The impeller 570 includes a base portion 573, a shroud 575, and multiple moving blades 574. The base portion 573 is a flat plate-shaped member that extends in a direction orthogonal to the shaft 531. The shroud 575 is positioned above the base portion 573 and opens upwards. The multiple moving blades 574 are connected to the base portion 573 and the shroud 575, and are arrayed in the circumferential direction.

The impeller housing 580 encompasses an upper side and the outer side of the impeller 570 in the radial direction. The impeller housing 580 includes an exhaust air guide 583. The exhaust air guide 583 extends radially outwards and downwards being positioned outward of the radially outer end of the impeller 570. The impeller housing 580 includes a vent 595 at the upper side from the lower end of the ring-shaped cover portion 566. Therefore, in a case where the vent 595 is positioned at the upper side from the motor 510, air blowing efficiency of the blower 501 can be improved even in a case where the length of a flow path configured between a later-described protruding inclined face 566e and the inner peripheral face of the exhaust air guide 583 is short. That is to say, a region can be configured in the flow path where the cross-sectional area of the flow path becomes locally small, so static pressure of the airflow rises in this region, and occurrence of turbulence due to separation of air in the flow path can be reduced.

The ring-shaped cover portion 566 is positioned at the upper side from the motor 510 in the axial direction. The ring-shaped cover portion 566 includes a ring-shaped cover flat face portion 566a and a protruding portion 566c. The ring-shaped cover flat face portion 566a extends in a direction orthogonal to the shaft 531 and faces the base portion 573 in the axial direction. The protruding portion 566c protrudes upwards from the ring-shaped cover flat face portion 566a, further on the outer side of the outer end of the impeller 570 in the radial direction. The outer side face of the protruding portion 566c in the radial direction has the protruding inclined face 566e. The protruding inclined face 566e is positioned progressively at the lower side from the inner side in the radial direction toward the outer side in the radial direction.

The position of the inner end of the protruding portion 566c in the radial direction, and the position of the inner end of the exhaust air guide 583 in the radial direction, are the same. That is to say, the exhaust air guide 583 smoothly curves toward the outer side in the radial direction and downwards, from the inner end toward the outer side. The protruding inclined face 566e also smoothly curves toward the outer side in the radial direction and downwards from the inner end toward the outer side. Thus, air discharged from the impeller is smoothly guided to the outer side in the radial direction and downwards, by the exhaust air guide 583 and the protruding inclined face 566e. Accordingly, occurrence of turbulence can be reduced near the inner peripheral face of the impeller housing 580 and near the protruding inclined face 566e, so the air blowing efficiency of the blower 501 is improved.

The exhaust air guide 583 includes a guide portion inner recess 583b and a guide portion inner projecting portion 583c. The guide portion inner recess 583b is a portion of which the inner peripheral face is recessed. The guide portion inner projecting portion 583c is positioned at the lower side from the guide portion inner recess 583b, and is a portion of which the inner peripheral face bulges outwards. The distance between the protruding inclined face 566e and the inner peripheral face of the exhaust air guide 583 is shortest at a region in which the guide portion inner projecting portion 583c and the protruding inclined face 566e face each other. Accordingly, the efficiency of the blower 501 is improved. That is to say, when air is discharged to the outer side in the radial direction by the impeller 570, the air passes through a region where the distance between the protruding inclined face 566e and the inner peripheral face of the exhaust air guide 583 is shortest. In this region, the sectional area of the flow path is locally small, so static pressure becomes high and thus separation of air flow at the inner peripheral face of the exhaust air guide 583 and the protruding inclined face 566e is reduced. Accordingly, occurrence of turbulence in the flow path configured between the protruding inclined face 566e and the inner peripheral face of the exhaust air guide 583 is reduced, and effective guidance in the flow path can be performed, so the efficiency of the blower 501 is improved.

The blower 501 includes an inward vent 596. The vent 595 and the inward vent 596 are alternately disposed in the circumferential direction. Part of air discharged toward the outer side in the radial direction by the impeller 570 passes through the flow path and is discharged toward the outer side in the radial direction via the vent 595. Meanwhile, another part of the air discharged toward the outer side in the radial direction by the impeller 570 passes through the flow path and is guided into the motor 510 via the inward vent 596.

The ring-shaped cover portion 566 includes a ring-shaped cover connection portion 566f between the vent 595 and the inward vent 596. At least part of the ring-shaped cover connection portion 566f is fixed. That is to say, at least part of the impeller housing 580 and at least part of the ring-shaped cover portion 566 are fixed. Accordingly, the impeller housing 580 and the ring-shaped cover portion 566 can be assembled with high precision. That is to say, the positional relationship between the inner peripheral face of the impeller housing 580 and the ring-shaped cover portion 566 can be managed in a highly precise manner. Accordingly, the sectional area of the flow path configured between the inner peripheral face of the impeller housing 580 and the protruding inclined face 566e can be configured with high precision, so occurrence of uneven air pressure in the flow path can be reduced. Moreover, vibrations of the impeller housing 580 can be reduced.

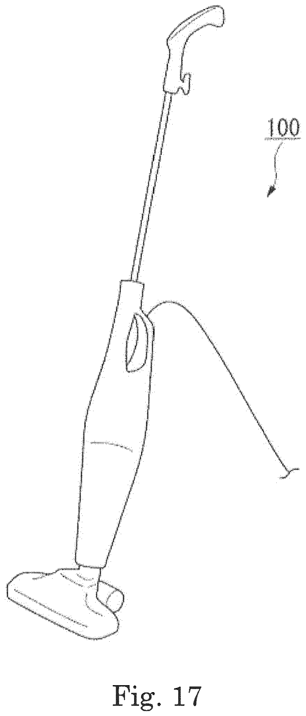

A vacuum cleaner 100 illustrated in Fig. 17 has the blower according to the present invention. Accordingly, the stator of the blower installed within the vacuum cleaner 100 can be efficiently cooled, while suppressing air blowing efficiency of the vacuum cleaner 100 from deteriorating.

The above-described components may be combined as appropriate, within a range where there is no contradiction therebetween.

### Reference Signs List

1, 101, 401, 501 blower
20 housing
25 second through hole
26 first through hole
28 through hole
30 rotor
31, 531 shaft
41 stator
41a core back portion
41b teeth portion
42 coil
50b, 66c, 566c protruding portion
60 exhaust air guide portion
65 outer periphery cylindrical portion
66a, 566a ring-shaped-cover flat portion
66f, 566 ring-shaped cover portion
66g, 566e protruding portion inclined face
67 inner guide portion
67a wall portion
67b guide portion inclined face
70, 570 impeller
73, 573 base portion
74, 574 moving blade
80, 180, 580 impeller housing
83, 183, 583 exhaust air guide
95 guide portion vent
100 vacuum cleaner
183b, 583b guide-portion inner-side recess
183c, 583c guide-portion inner-side protruding portion FP flow path
J central axis

## Claims

1. A blower, comprising:
a rotor that has a shaft disposed following a center axis extending vertically;
a stator positioned at an outer side of the rotor in a radial direction;
a cylindrical housing extending in the axial direction, that accommodates the rotor and the stator;
an impeller attached to the shaft, at an upper side from the stator; and
an exhaust air guide portion attached at the upper side of the housing,
wherein the stator includes
a ring-shaped core back portion,
a plurality of teeth portions extending from the core back portion toward an inner side in the radial direction, and
a plurality of coils wound on the teeth portions,
wherein the housing has a plurality of through holes passing through the housing in the radial direction,
wherein the plurality of through holes are disposed following a circumferential direction,
wherein the exhaust air guide portion includes
an outer periphery cylindrical portion positioned at the outer side of the impeller in the radial direction, and
an inner guide portion extending toward the lower side from the outer periphery cylindrical portion,
wherein a plurality of the inner guide portion are provided following the circumferential direction, and cover the outer side of the through holes in the radial direction,
and wherein a guide portion vent that opens to the outer side of the exhaust air guide portion is disposed between inner guide portions that are adjacent in the circumferential direction.

2. The blower according to Claim 1, wherein a face on the inner side of the inner guide portion in the radial direction has a guide portion inclined face that is progressively positioned at the lower side from the outer side in the radial direction toward the inner side in the radial direction.

3. The blower according to Claim 2, wherein the guide portion inclined face is a curved face of which the inclination as to the axial direction progressively becomes larger from the outer side in the radial direction toward the inner side in the radial direction.

4. The blower according to either Claim 2 or 3, wherein the exhaust air guide portion has a wall portion protruding to the inner side in the radial direction from the guide portion inclined face.

5. The blower according to any one of Claims 1 through 4, wherein the through holes include a first through hole that connects to a space further at the inner side in the radial direction than the core back portion.

6. The blower according to Claim 5, wherein the through holes include a plurality of the first through hole,
and wherein the first through holes are positioned equidistantly following the circumferential direction.

7. The blower according to either Claim 5 or 6, wherein a flow path extending in the axial direction is provided between the stator and the housing,
and wherein the through holes include a second through hole that opens to the flow path.

8. The blower according to Claim 7, wherein at least part of an outer side face of the core back portion in the radial direction is exposed to the flow path.

9. The blower according to either Claim 7 or 8, wherein the through holes include a plurality of the first through holes and a plurality of the second through holes,
and wherein the first through holes and the second through holes are provided alternately in the circumferential direction.

10. The blower according to any one of Claims 1 through 9, wherein the through holes are situated at the upper side from the core back portion.

11. The blower according to any one of Claims 1 through 10, further comprising:
an impeller housing that encompasses above and the outer side in the radial direction of the impeller, and is fixed to the upper portion of the exhaust air guide portion; and
a ring-shaped cover portion that is positioned at the upper side from the housing,
wherein the impeller includes
a base portion that extends in a direction orthogonal to the shaft, and
a plurality of moving blades positioned on an upper face of the base portion,
wherein the impeller housing has, further at the outer side in the radial direction from an outer end of the impeller in the radial direction, a ring-shaped exhaust air guide that extends to the outer side in the radial direction and to the lower side,
wherein the ring-shaped cover portion includes
a ring-shaped-cover flat portion that extends in a direction orthogonal to the shaft, and faces the base portion across a gap, and
a protruding portion that protrudes toward the upper side from the ring-shaped cover portion, further at the outer side in the radial direction from the outer end of the impeller in the radial direction,
wherein an outer side face of the protruding portion in the radial direction has a protruding portion inclined face that progressively is positioned at the lower side from the inner side in the radial direction toward the outer side in the radial direction,
wherein the exhaust air guide portion includes a guide-portion inner-side recess of which an inner peripheral face is recessed, and a guide-portion inner-side protruding portion that is positioned on the lower side from the guide-portion inner-side recess and of which an inner peripheral face bulges,
wherein the protruding portion inclined face and an inner peripheral face of the exhaust air guide portion face each other across a gap,
and wherein a distance between the protruding portion inclined face and an inner peripheral face of the exhaust air guide portion is the shortest in a region where the protruding portion inclined face and the guide-portion inner-side protruding portion face each other.

12. A vacuum cleaner, comprising the blower according to any one of Claims 1 through 11.
